# EUROPEAN PATENT SPECIFICATION

(11) **EP 2 753 141 B1**
(45) Date of publication and mention of the grant of the patent: **06.02.2019**
(21) Application number: 12826966.9
(22) Date of filing: 27.04.2012
(51) Int. Cl.: H04B 10/25, H04W 88/08, H04J 14/02, H04B 10/2575

(54) **DATA INTERACTION SYSTEM AND METHOD THEREOF**
DATENINTERAKTIONSSYSTEM UND VERFAHREN DAFÜR
SYSTÈME D'INTERACTION DE DONNÉES ET SON PROCÉDÉ

(30) Priority: 02.09.2011 CN 201110258272
(43) Date of publication of application: 09.07.2014
(73) Proprietor: ZTE Corporation, Shenzhen, Guangdong 518057 (CN)
(72) Inventor: YU, Jinqing, Shenzhen Guangdong 518057 (CN); CAI, Wenzhou, Shenzhen Guangdong 518057 (CN); WANG, Huitao, Shenzhen Guangdong 518057 (CN); FAN, Lizhen, Shenzhen Guangdong 518057 (CN)
(74) Representative: Lavoix
(86) International application number: PCT/CN2012/074858
(87) International publication number: WO 2013/029385

(56) References cited:
- EP-A1- 1 553 791
- EP-A2- 2 144 388
- WO-A1-2011/050491
- CN-A- 101 166 064
- CN-A- 101 350 662
- US-A1- 2008 145 056
- US-B1- 7 493 129

## Description

### TECHNICAL FIELD

The disclosure relates to the field of mobile communications, and in particular to a data interaction system and method.

### BACKGROUND

At present, a base station in a conventional wireless access network mainly consists of two parts, where a function of base band processing is performed by one part and a function of Radio Frequency (RF) signal processing is performed by another part. Due to the bulky size of the base station, a RF cable (feeder) is required to be connected between the base station and an antenna. In some cases (e.g., in a Time Division-Synchronous Code Division Multiple Access (TD-SCDMA) system), a large number of RF cables may be required. Moreover, if the antenna is set up on a high pole, a long transmission distance and an excessive signal loss will be led to, and thus the power for the RF transmitting part will be increased.

To solve the above problem, the base station is currently divided into two units: a Base Band Unit (BBU) and a Radio Remote Unit (RRU). With the architecture of the separated BBU-RRU, the RRU may be placed on the top of a tower, which shortens the feeder length greatly and reduces the power loss.

Power consumption becomes the main cost for operation and maintenance within the mobile communication industry. Besides wireless devices per se, the power consumption of supporting transmission devices, computer rooms, air conditioners and the like is the significant factor thereof. Under the trend of a decreased number of the computer rooms and energy-saving and emission reduction, it becomes a future solution of reducing the costs, fixed assets investment, and administrative expenses of an enterprise to centralize the BBUs in C-RAN architecture, and also becomes a main development direction of the wireless access network.

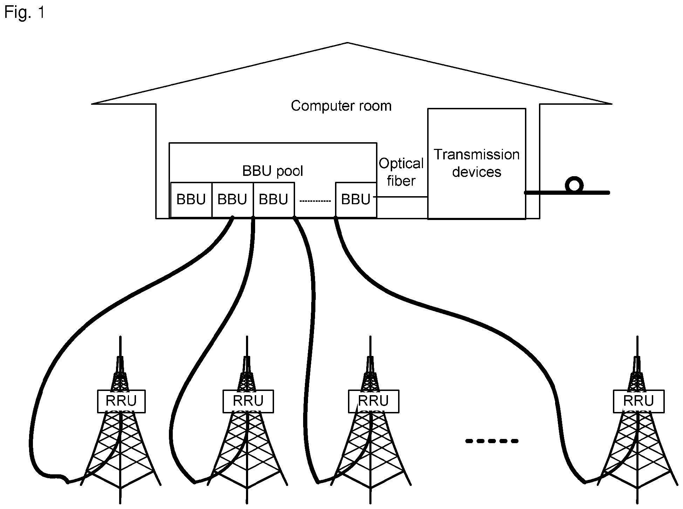

Fig. 1 is a schematic diagram of a scenario in which BBUs are centrally placed in the related art. As shown in Fig. 1, each of the BBUs, centrally placed in a baseband pool of a computer room, is connected with a RRU via a high-speed optical fiber. The C-RAN is a Clean system based on centralized processing, collaborative radio and real-time cloud infrastructure. The basic meaning of the C-RAN is to place the BBUs centrally, each of which is connected with mutiple RRUs. The BBUs may share baseband processing resources after centrally placed, thus saving the maintenance costs of the transmission devices, the computer rooms, the air conditioner and the like for each base station.

In the related art, an optical fiber network is usually a ring network, which is protected in both directions. Take 10 sites on each ring as an example, if the RRUs in the 10 sites are connected with a centralized BBU pool, since only a pair of optical fibers is required to form the ring network for the transmission devices in a conventional method, then 10 pairs of optical fibers are needed in total on the ring.

Duct optical cable resources are scarce in most dense urban areas, therefore in order to reduce the requirement for optical fibers, a wavelength division multiplexing mode may be applied. A wavelength division multiplexing system is divided into an open application and an integrated application. In the open application, general wavelength division multiplexing devices are applied; while in the integrated application, an optical interface with different wavelengths (referred to as a color light interface) are set for the BBUs and RRUs of the user side devices in combination with the Optical Multiplexer/Demultiplexer (OMD)/Optical Add-Drop Multiplexer (OADM). One or more wavelengths are allocated for each site by means of the wavelength division multiplexing mode, so that a pair of optical fibers (one optical fiber for a single fiber bi-directional system) is shared for multiple sites to implement Common Public Radio Interface (CPRI) transmission of multi-groups.

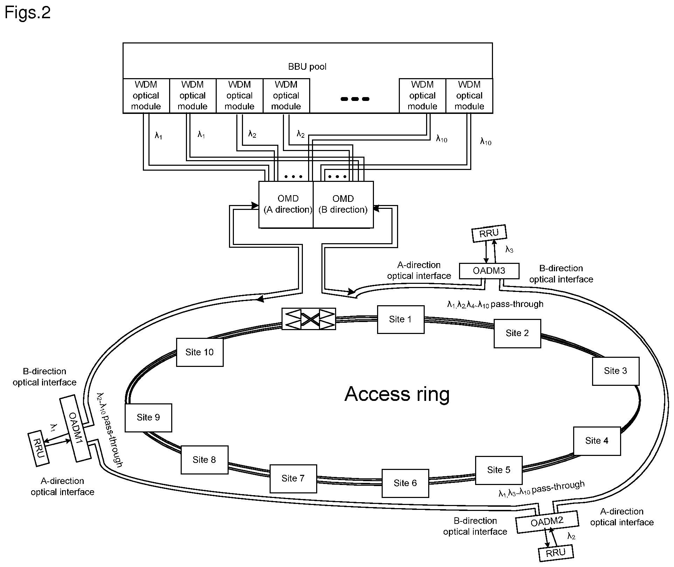

Fig. 2 is a schematic diagram of a ring network by applying a WDM mode in the related art. As shown in Fig. 2, OADMn represents an optical signal with a wavelength of An which is added or dropped by an OADM. For example, OADM1 represents an optical signal with a wavelength of λ1 which is added or dropped by the OADM. An OMD is an optical multiplexing demultiplexer, and a Wavelength Division Multiplexer (WDM) optical module refers to a Coarse Wavelength Division Multiplexer (CWDM) or a Dense Wavelength Division Multiplexer (DWDM). As shown in Fig. 2, under the above networking mode, the number of the sites that can be concatenated in each of the rings is limited with the wavelength division multiplexing mode, since an insertion loss will become relatively large if excessive OADMs are concatenated. If it is assumed that the insertion loss of each OADM is 2dB and the loss of the optical fiber is 6dB, 10 sites may be concatenated for a CPRI interface of 2.5G. A new optical fiber loop is needed for concatenating more than 10 sites.

US 2008/0145056 A1 discloses that communications method between a main station and processing nodes includes interconnecting the main station and the nodes in an optical path defining adjacent nodes and non-adjacent nodes, operatively grouping the nodes in a plurality of distinct sub-groups, each formed by non-adjacent nodes, at least one of said sub-groups including at least two nodes generating at the main station a multiplexed optical signal propagating along the path for serving the nodes, the multiplexed optical signal including a plurality of optical channel signals having a respective plurality of distinct carrier wavelengths, each carrier wavelength being associated with a respective sub-group of nodes, and serving each node of each sub-group of nodes with a respective portion of the optical channel signal having the associated carrier wavelength.

### SUMMARY

Embodiments of the present disclosure provides a data interaction system and method, so as to solve the problem that the number of the concatenated sites is limited resulting from the relatively large insertion loss due to the excessive concatenated OADM modules in an optical fiber ring network in the related art.

The features of the data interaction system and method according to the present disclosure are defined in the independent claims, and the preferable features according to the present disclosure are defined in the dependent claims. The embodiments and/or examples of the following description which are not covered by the appended claims are considered as not being part of the present invention.

The embodiments of the present disclosure have the following beneficial effect.

By means of RRUs cascading and WDM techniques, the RRUs in more than two sites are concatenated, and one wavelength is shared by the concatenated RRUs. By configuring wavelengths appropriately and concatenating the symmetric sites including RRUs, the number of the concatenated sites may be increased exponentially, so that the problem that the number of the concatenated sites is limited resulting from the relatively large insertion loss due to the excessive concatenated OADM modules in an optical fiber ring network in the related art are solved, and the difficulties induced by the scarce duct optical cable resources can be overcome effectively, thus utilizing optical fiber resources more efficiently and alleviating the difficulties to networking brought by the scarce optical cable resources effectively. In addition, in the embodiments of the present disclosure, the optical signals are divided into two parts and transmitted via the two optical fibers of opposite flow directions, and thus the bandwidth in the optical fiber links can be expanded.

### BRIEF DESCRIPTION OF THE DRAWINGS

Fig. 1 is a schematic diagram of a scenario in which BBUs are centrally placed in the related art;
Fig. 2 is a schematic diagram of networking annularly by applying a WDM mode in the related art;
Fig. 3 is a schematic diagram of a structure of a data interaction system in an embodiment of the present disclosure;
Fig. 4 is a schematic diagram of a cascaded network formed by three symmetric sites in a data interaction system in an embodiment of the present disclosure;
Fig. 5 is a schematic diagram of RRUs connected in a ring structure in an embodiment of the present disclosure;
Fig. 6 is a schematic diagram of RRUs connected in a chain structure in an embodiment of the present disclosure;
Fig. 7 is a schematic diagram of RRUs connected in a tree structure in an embodiment of the present disclosure;
Fig. 8 is a schematic diagram of splitting optical signals with two wavelengths of λ1 and λ2 by an OADM module in an embodiment of the present disclosure;
Fig. 9 is a flow chart of a data interaction method in a downlink direction in an embodiment of the present disclosure; and
Fig. 10 is a flow chart of a data interaction method in an uplink direction in an embodiment of the present disclosure.

### DETAILED DESCRIPTION

To solve the problem that the number of the concatenated sites is limited resulting from the relatively large insertion loss due to the excessive concatenated OADM modules in an optical fiber ring network in the related art, embodiments of the present disclosure provide a data interaction method and system between BBUs and RRUs based on an optical fiber ring network. In the embodiments of the present disclosure, BBUs are needed to be centrally placed and connected to OMD modules, the OMD modules are connected with the OADM module of each site via two optical fibers, and thereby all sites are connected in series to form a ring topology network. In the ring topology network formed by the OMD modules and OADM modules, OADM modules, which use signals of the same wavelengths, are uniformly distributed on an optical fiber link by means of symmetric sites. The OADM module of each site may access multiple RRUs, and the connection mode between the BBUs and the RRUs may be a ring-ring structure, a ring-tree structure, or a ring-chain structure. When the BBUs and the RRUs exchange data, the data are transmitted by two optical fibers in a load sharing mode. Through the above processing, more sites may be accessed to the ring topology network by means of the embodiments of the present disclosure, without increasing optical fiber resources. The present disclosure is further elaborated below with reference to the accompanying drawings and the embodiments. It should be appreciated that the specific embodiments described herein are merely used to explain the present disclosure but are not intended to limit the present disclosure.

### Apparatus embodiments

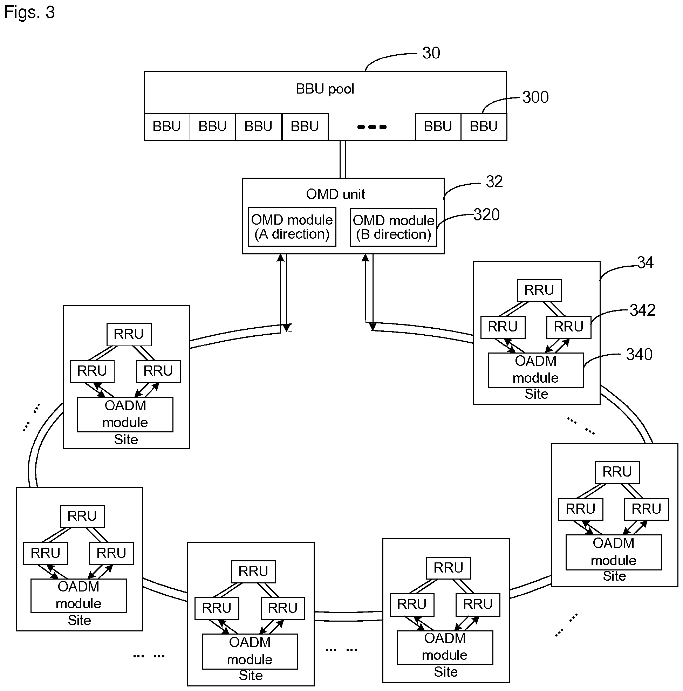

According to an embodiment of the present disclosure, a data interaction system is provided. Fig.3 is a schematic diagram of a structure of the data interaction system in the embodiment of the present disclosure. As shown in Fig. 3, the data interaction system according to the embodiment of the present disclosure includes: a BBU pool 30, an OMD unit 32 and multiple sites 34. The BBU pool 30 includes one or more BBUs 300, the OMD unit 32 includes two OMD modules 320, and each of the sites 34 includes an OADM module 340 and one or more RRUs 342. Various modules in the embodiment of the present disclosure are elaborated below.

In the embodiment of the present disclosure, the BBU pool 30 is connected to the OMD unit 32, and the OMD unit 32 is connected with the OADM modules 340 in each of the sites 34 via two optical fiber links in different directions. Each OADM module 340 is connected with one or more RRUs 342 via two optical fiber links in different directions, and thus the BBU pool 30 and the sites 34 are concatenated into a ring topology network. The sites 34 are divided into multiple site groups, and sites 34 in each of the multiple site groups use the same wavelength and are uniformly distributed in the ring topology network. The number of sites between two adjacent sites of the same site group is less than the maximum number of the concatenated sites using different wavelengths in the ring topology network.

The BBU 300 is configured to: split a downlink electrical signal to be sent to each RRU 342 into two parts, convert the two parts of the downlink electrical signal into a downlink optical signal with two parts having the same wavelength, and send the two parts of the downlink optical signal to the OMD unit 32; and receive an uplink optical signal from the OMD unit 32, and convert the uplink optical signal into an uplink electrical signal and process the uplink electrical signal.

It should be noted that the wavelengths of downlink optical signals sent by respective BBUs 300 in the BBU pool 30 are different each other, while the wavelengths of downlink optical signals sent by the same BBU are the same. In addition, in a practical application, after the two parts of downlink electrical signals are converted into two parts of downlink optical signals of the same wavelength, it is needed to send the two parts of downlink optical signals respectively to two OMD units 32.

The OMD unit 32 is configured to: multiplex the downlink optical signals of different wavelengths from different BBUs, and send the two parts of the downlink optical signals step by step to the OADM module 340 in each of the sites respectively via two optical fiber links in different directions; and demultiplex the uplink optical signal received from the OADM module 340 into uplink optical signals of different wavelengths, and send the demultiplexed uplink optical signals of different wavelengths to corresponding BBUs 300.

The OADM module 340 is configured to: acquire, from the two optical fiber links in different directions, downlink optical signals which have the same wavelength as a local wavelength, and send the downlink optical signals to RRUs 342 connected with the OADM module 340; and receive an uplink optical signal with two parts having the local wavelength from the RRUs 342 connected with the OADM module 340, multiplex the two parts of the uplink optical signal having the local wavelength with other uplink optical signals of different wavelengths, and send the two parts of the multiplexed uplink optical signals to the OADM module 340 of a next site respectively via the two optical fiber links in different directions until the two parts of the multiplexed uplink optical signals are sent to the OMD unit 32.

The OADM module 340 is specifically configured to: acquire, from the two optical fiber links in different directions, multiple downlink optical signals of different wavelengths which are the same as local wavelengths, and multiplex the multiple downlink optical signals of different wavelengths with other uplink optical signals of different wavelengths.

The RRU 342 is configured to: convert the received downlink optical signals into downlink electrical signals, extract a corresponding signal from the downlink electrical signals and process the corresponding signal, multiplex the remaining of the downlink electrical signals with an uplink electrical signal to be sent to the BBU 300, split the multiplexed electrical signals into two parts, convert the two parts of the electrical signals into two parts of uplink optical signals having the local wavelength, and send the two parts of the uplink optical signals having the local wavelength respectively to a next RRU 342 until the two parts of the uplink optical signals are sent to the OADM module 340 respectively.

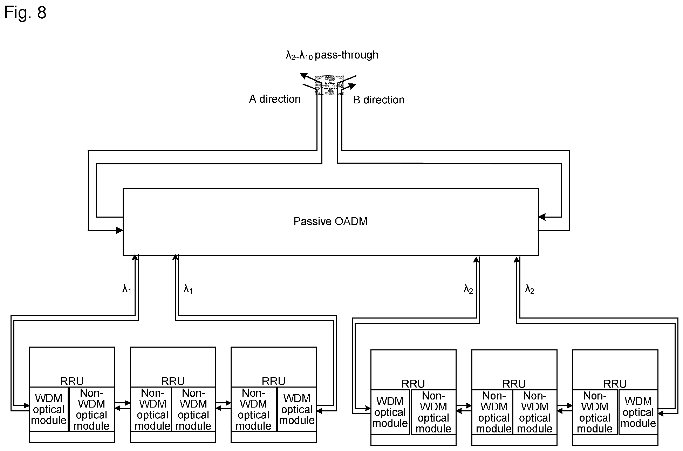

It should be noted that optical signals exchanged between the RRUs 342 connected with the OADM module 340 and the OADM module 340 are color light signal, while optical signals exchanged among RRUs 342 are white light signals. In one site, if the OADM module 340 may acquire multiple, from the two optical fiber links in different directions, downlink optical signals of different wavelengths which are the same as local wavelengths, then the wavelengths used by the multiple RRUs 342 in the site are different. Namely, as described in Fig. 8, in a same site, if there are more than one chain structures, ring structures or tree structures, the optical wavelengths of the same number as that of the structures are extracted from the OADM. If the OADM module 340 may acquire, from the two optical fiber links in different directions, one downlink optical signal having different wavelength which is the same as the local wavelength, then the wavelength used by the multiple RRUs 342 in the site is same. In addition, a same RRU 342 uses the same wavelength in the two optical fiber links in different directions.

In one site, the connection mode among the OADM module 340 and the multiple RRUs 342 includes: a ring structure, a chain structure, and a tree structure.

Preferably, in the embodiments of the present disclosure, an auto-switching module may also be included, which is configured to use another optical fiber link automatically for data transmission in the case that a failure occurs on one of the two optical fiber links of opposite flow directions.

The aforementioned technical solutions in the embodiments of the present disclosure are elaborated below.

Step 1: Two OMD modules for wavelength division multiplexing are set on a BBU side, and one OADM module and RRUs connected with the OADM module are set in each site; and the BBUs and the RRUs are connected into a ring topology network with the two OMD modules for wavelength division multiplexing and the OADM module in each site via two optical fiber links in different directions.

Specifically, in Step 1, the BBUs are centrally arranged, and thus may share baseband processing resources conveniently. The centrally arranged BBUs are connected with both ends of the optical fibers via a A-direction optical interface and a B-direction optical interface of an OMD unit for wavelength division multiplexing to form a ring topology network; and each optical fiber may be connected with multiple OADM modules. Both the BBUs are connected with the A-direction optical interface and the B-direction optical interface of the OADM modules through the two optical fiber links in the manner of opposite directions.

Step 2: Downlink electrical signals sent from the BBUs to each of the RRUs are converted into optical signals of different wavelengths, and the optical signals of different wavelengths are sent respectively to the two OMD modules for wavelength division multiplexing.

Specifically, in Step 2, a part of the downlink optical signals of different wavelengths are multiplexed by one of the OMD modules, and then are sent step by step to the A-direction optical interface of the OADM module in each site via one optical fiber link; and another part of the downlink optical signals are multiplexed by another of the OMD modules, and then are sent step by step to the B-direction optical interface of the OADM module in each site via another optical fiber link. Namely, transmission of the optical signals is shared by the two fiber links (also referred to as load sharing). With regard to the downlink optical signals from the BBUs, one part of the downlink optical signals are sent step by step to the A-direction optical interface of the OADM module in each site via one of the optical fiber links; and the remaining part of the downlink optical signals are sent step by step to the B-direction optical interface of the OADM module in each site via another of the optical fiber links along the opposite direction.

Step 3: Optical signals having the same wavelength as a local wavelength are extracted by each OADM module from the A-direction and B-direction optical interfaces, and are sent to the RRUs; and the RRU converts the optical signals having corresponding wavelengths into electrical signals through a wavelength division multiplexing (WDM) optical module.

Specifically, in Step 3, the following processing is included.

Step 31: The downlink optical signals from the BBUs are sent to each OADM module via the two optical fiber links; the OADM module extracts, from the received optical signals, optical signals whose wavelengths are matched with that of the OADM module, sends them to RRUs, and then the OADM module sends the remaining of the optical signals to a next OADM having the same wavelength as the remaining of the optical signals; and then Steps 32 and 33 are performed.

Step 32: The downlink optical signals output by the B-direction optical interface of the OADM module are sent to one RRU, and are converted into electrical signals by the WDM optical module of the RRU; the WDM optical module of the RRU extracts the corresponding electrical signals, and after multiplexing the remaining of the electrical signals with uplink electrical signals to be sent from the RRU to the BBU, the WDM optical module of the RRU converts the multiplexed electrical signals into optical signals of the local wavelength and sends the optical signals of the local wavelength to a next RRU; the same operation is performed by the next RRU until the optical signals are re-sent to the A-direction optical interface of the OADM module; and the optical signals received from the RRUs are multiplexed with optical signals of other wavelengths by the OADM module, and then are sent to the OADM module in the next site.

Step 33: The downlink optical signals output by the A-direction optical interface of the OADM module are sent to one RRU, and are converted into electrical signals by the optical module of the RRU; the optical module of the RRU extracts the corresponding electrical signals, and after multiplexing the remaining of the electrical signals with uplink electrical signals to be sent from the RRU to the BBU, the optical module of the RRU converts the multiplexed electrical signals into optical signals of the local wavelength and sends the optical signals of the local wavelength to a next RRU; the same operation is performed by the next RRU until the optical signals are re-sent to the B-direction optical interface of the OADM module; and the optical signals received from the RRUs are multiplexed with optical signals of other wavelengths by the OADM module, and then are sent to the OADM module in the next site.

Step 4: The uplink electrical signals are converted into uplink optical signals of local wavelength by each RRU, then sent to the local OADM module, and multiplexed with the optical signals on the optical fiber links, and the combined optical signals are sent to the next OADM module; and the same operation is performed by the next OADM module until the optical signals are sent to the BBUs.

Specifically, in Step 4, the following processing is included.

Step 41: The uplink electrical signals to be sent to the BBUs are split into two parts by each RRU, converted into uplink optical signals of the local wavelength, and sent to the OADM module respectively via the A-direction optical interface and the B-direction optical interface.

Step 42: The uplink optical signals of the local wavelength are multiplexed with the optical signals of other wavelengths received from the A-direction optical interface by the OADM module, and the multiplexed uplink optical signals are sent to the next OADM module via its B-direction optical interface along one optical fiber link, until the uplink optical signals are sent to the A-direction optical interface of the OMD module and are finally sent to the BBUs.

Step 43: The uplink optical signals of the local wavelength are multiplexed with the optical signals of other wavelengths received from the B-direction optical interface by the OADM module, and the multiplexed uplink optical signals are sent to the next OADM module via its A-direction optical interface along another optical fiber link, until the uplink optical signals are sent to the B-direction optical interface of the OMD module and are finally sent to the BBUs.

Step 44: The uplink optical signals received by two respective OMD modules are demultiplexed into optical signals of different wavelengths by the two OMD modules, and are sent to corresponding BBUs. Each of the OMD modules may be a Coarse Wavelength Division Multiplexer (CWDM) for coarse wavelength division multiplexing or a Dense Wavelength Division Multiplexer (DWDM) for dense wavelength division multiplexing.

It may be seen from the above processing that, in the embodiments of the present disclosure, the optical wavelengths allocated for the RRUs are available wavelengths stipulated in the International Telecommunication Union standards. The same optical wavelength used for carrying data is allocated for the same RRU in two optical fiber links. Optical signals having one or more wavelengths may be extracted from or added into the OADM module in each site, and sent to the RRUs in the local site.

In addition, in the structure of the ring topology network in the embodiments of the present disclosure, multiple OADM modules may be connected, and the optical signals of the same wavelength may be accessed into the multiple OADM modules (sites). Namely, the OADM modules are divided into several groups, each group having one or more OADM modules, into which the optical signals with the same wavelength can be accessed.

In the embodiments of the present disclosure, the multiple OADM modules, into which the optical signals with the same wavelength are accessed, are concatenated by means of symmetric sites, and thus may effectively improve the limitation to the accessed sites due to the insertion loss of the OADM modules, so that the number of the sites concatenated in the system may be increased exponentially. Preferably, the OADM modules, into which the optical signals with the same wavelength can be accessed, may be concatenated in the ring topology network in an equally spaced way. Specifically, the optical fiber ring links are evenly divided based on the number of the sites, and one OADM module with the same wavelength is concatenated in each segment, and thus the OADM modules with the same wavelengths are distributed in the ring topology network in the equally spaced way. The design of the symmetric sites may enable the number of the concatenated RRU sites to be increased exponentially, namely, the number of the sites may be doubled in the case that two symmetric sites are concatenated, and the site number may be increased to N times in the case that N symmetric sites are concatenated.

Furthermore, the optical signals that are input or output by the RRUs connected with the optical interface of the OADM module in each site are color light signals, and the optical signals input or output by the other RRUs are white light signals.

The optical signals of one or more wavelengths may be extracted out of or added into the OADM module in each site. If the optical signals of multiple wavelengths are extracted or added, then different wavelengths of the optical signals are applied to the multiple RRUs connected with the OADM module, i.e., optical signals of only one wavelength are accessed into one RRU. In other words, one optical wavelength for carrying data may be allocated for each RRU, and the optical wavelengths used by all RRUs in each site may be different from each other.

Each site may support the access of the optical signals of multiple different wavelengths, and each optical wavelength may support one type of network in each site, thus simplifying the system design. For example, three wavelengths may be accessed into one site, then the system in the embodiments of the present disclosure may support three types of networks such as a Global System of Mobile communications (GSM) network, a Wideband Code Division Multiple Access (WCDMA) network, and a Long Term Evolution (LTE) network. The more wavelengths are accessed, the more types of networks are supported by the site.

In the embodiments of the present disclosure, the OADM module is connected with the RRUs via the optical fibers, and a ring structure may be used as the connection mode, i.e., the structure that small rings are nested in a large ring is used in the system, which makes protection ability of the overall system stronger. The large ring is the ring topology network consisting of the OMD modules and the OADM module in each site, and the small ring is the ring topology network consisting of each OADM module and the RRUs within the site in which the OADM module is located. A tree-structure or a chain-structure may also be used in the RRUs within each site.

The processes that the optical signals are processed by each OADM module and the RRUs are explained as follows.
1) Optical signals of one wavelength are split by OADM module, and are converted into electrical signals through a WDM optical module within one RRU; and the corresponding electrical signals are extracted by the RRU, and the remaining of the electrical signals are converted into white light signals through a non-WDM optical module and then sent to the non-WDM optical module of a next RRU.
2) If the next RRU is connected with the OADM module, then after the electrical signals passing through the non-WDM optical module are processed by the RRU, the electrical signals are converted into optical signals of the same wavelength as the OADM module through the WDM optical module, multiplexed and sent to the OADM module of a next site.
3) If the next RRU is not connected with the OADM module, then the optical signals output or input by the RRU are white light signals, i.e., both the electrical-optical conversion and the optical-electrical conversion are performed through the non-WDM optical module. This operation is repeated by a next RRU until the RRU is connected with the OADM module, and Step 2) is executed.
4) Optical signals having more than one wavelengths are split by the OADM module, then optical signals corresponding to each wavelength are accessed into the RRU through different optical fibers; steps 1) to 3) are performed on the optical signals corresponding to each wavelength, and the optical signals of different wavelengths that are recovered by the WDM optical module are sent to the OADM module, multiplexed with optical signals of other wavelengths, and then sent to the OADM module of the next site.

In the embodiments of the present disclosure, the uplink electrical signals are converted into the optical signals of the local wavelength by the RRUs of each site by means of electrical regeneration, multiplexed with optical signals of other wavelengths in the site, and then sent to the next site via another optical interface of the RRUs.

Specifically, the uplink electrical signals are multiplexed by the RRU with the uplink data sent from a previous RRU, then subjected to the electrical-optical conversion of the optical module and sent to a next optical module. If the next optical access point of the RRU is still a RRU, then the signals are converted into white light signals using the non-WDM optical module and sent to the next RRU. If the next optical access point of the RRU is an OADM module, then the signals are converted by the WDM optical module into color light signals having the same optical wavelength as that of the OADM module, and sent to the OADM module. The color light signals are multiplexed with the optical signals of other wavelengths, and sent to the OADM module of the next site. The above processing is repeated until the uplink data are sent to the OMD modules and finally sent to the BBUs.

In the embodiments of the present disclosure, the OMD modules at the BBU side are connected with the OADM module in each site via two optical fibers of opposite flow directions to form a ring topology network. The bandwidth for carrying data between the BBUs and the RRUs is shared by the two optical fibers. A load sharing mechanism in both uplink direction and downlink direction is elaborated below.

### 1. Load sharing mechanism in the downlink direction:

The downlink electrical signals to be sent to the RRUs are split into two parts by each BBU, and are converted into two parts of optical signals of corresponding wavelengths respectively; and one part of the two parts of optical signals are sent to one OMD module via the A-direction optical interface, and another part of the two parts of optical signals are sent to another OMD module via the B-direction optical interface.

All the downlink optical signals in A direction are multiplexed by the OMD module transmitting the downlink optical signals in A direction, are output via the B-direction optical interface and are sent to the A-direction optical interface of the OADM module in each site of the ring network via an optical fiber link; and all the downlink optical signals in B direction are multiplexed by the OMD module transmitting the downlink optical signals in B direction, are output via the A-direction optical interface and are sent to the B-direction optical interface of the OADM module in each site of the ring network via another optical fiber link.

The downlink optical signals having the wavelengths allocated by each OADM module are extracted by the OADM module from the downlink optical signals received through the A-direction optical interface and the B-direction optical interface, and are sent to the RRUs; and the downlink optical signals of both the two links from the OADM module are converted into electrical signals by each RRU, and the RRU extracts the data of the RRU, and multiplexes the data with the extracted electrical signals to recover the original data from the BBU.

### 2. Load sharing mechanism in the uplink direction:

The uplink electrical signals to be sent to the BBUs are split into two parts by each RRU, and are converted into two parts of optical signals of corresponding wavelengths respectively; and one part of the two parts of optical signals are sent to the OADM module via the A-direction optical interface, multiplexed with the optical signals of other wavelengths from the A-direction optical interface, and output to the OADM module of the next site via the B-direction optical interface, until they are sent to one of the OMD modules at the BBU side. Another part of the two parts of optical signals are sent to the OADM module via the B-direction optical interface, multiplexed with the optical signals of other wavelengths from the B-direction optical interface, and output to the OADM module of the next site via the A-direction optical interface, until they are sent to another OMD module at the BBU side.

The uplink optical signals from each RRU are demultiplexed by the two OMD modules at the BBU side from the received downlink optical signals in the A direction and the B direction, and are sent to the corresponding BBUs; and the uplink optical signals of both links of each RRU from the two OMD modules are converted by the BBU into the electrical signals and synchronously processed, and the electrical signals of both links are multiplexed by each BBU to recover the uplink data.

In the embodiments of the present disclosure, if a failure occurs on one of the two optical fiber links for forming the ring topology network such that data cannot be transmitted, then the data transmitted in the system may be automatically switched onto another normal optical fiber link.

### 1. Downlink direction:

Data are split into two parts by each BBU based on the two optical fibers, and are transmitted to the RRUs via the two optical fibers. During the process of transmission, information for indicating that the data are received by the RRUs is received by the BBU. If the information is not received in either of the two directions, it means that a failure occurs on the optical fiber link in this direction, then the exception handling mechanism is initiated automatically by the BBU, namely, all downlink data are transmitted via the normal optical fiber link.

### 2. Uplink direction:

Data are split into two parts by each RRU based on the two optical fibers, and are transmitted to the BBUs via the two optical fibers. During the process of transmission, information for indicating that the data are received by the BBUs is received by the RRU. If the information is not received in either of the two directions, it means that a failure occurs on the optical fiber link in this direction, then the exception handling mechanism is initiated automatically by the RRUs, namely, all uplink data are transmitted via the normal optical fiber link.

The technical solutions in the embodiments of the present disclosure are illustrated below by reference to the accompanying drawings.

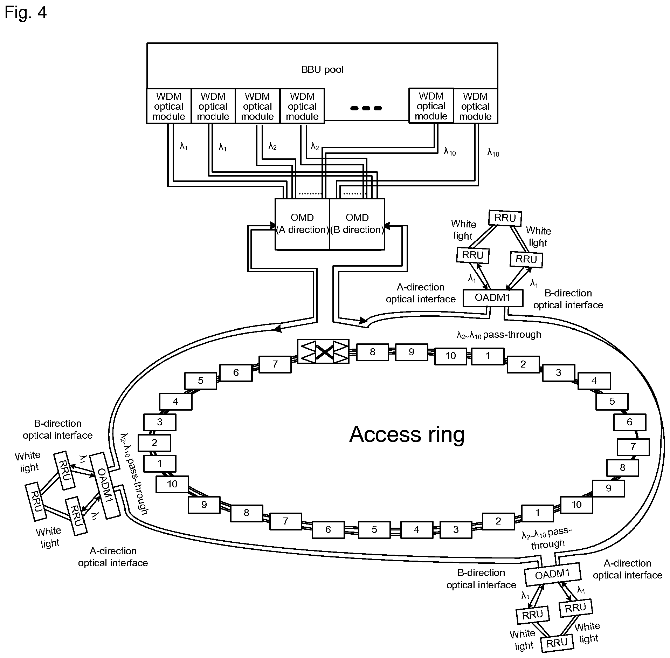

Fig. 4 is a schematic diagram of a cascaded network formed by three symmetric sites in a data interaction system in an embodiment of the present disclosure. As shown in Fig. 4, by means of three cascaded symmetric sites, the number of the accessed sites may triple. It is assumed that 10 sites may be supported at most by the ring network in the system without the technical solutions in the embodiments of the present disclosure in the related art. However, as shown in Fig. 4, up to 30 sites may be supported by the network in the system with the technical solutions in the embodiments of the present disclosure. In Fig. 4, OADMn denotes that optical signals having a wavelength of An are added or split by an OADM. For example, OADM1 in the figure denotes that optical signals having a wavelength of λ1 are added or split by the OADM.

In the embodiments of the present disclosure, WDM techniques may be a solution containing BBU/RRU plus color light interface and external optical multiplexer/demultiplexer, and may also be a solution containing BBU/RRU and external WDM devices. The applied WDM techniques may be CWDM techniques, and may also be DWDM techniques. The "WDM optical module" in Fig. 4 may be a CWDM module or a DWDM module.

The same wavelength is used for the sites having the same reference numbers in uplink and downlink. For example, the same wavelength of λ1 is used for the three sites having the reference number of 1 in uplink and downlink. Since the OADM1 is passed, the insertion loss is approximately 2dB for the through optical signals of other wavelengths. However, the insertion loss resulting from passing through other OAMD modules may be recovered after the split optical signals of the wavelength λ1 are subjected to the optical-electrical conversion and the electrical-optical conversion. In this way, the optical signals of respective wavelength are subject to the OADM insertion loss for at most ten times. After the optical signals of respective wavelength are subject to the OADM insertion loss for nine times, if the optical signals of respective wavelength are accessed into the OADM having the same wavelength as that of the optical signals at the tenth time, then the power budget problem of the optical signals may be solved, and thus the available number of the sites in each site may be effectively increased.

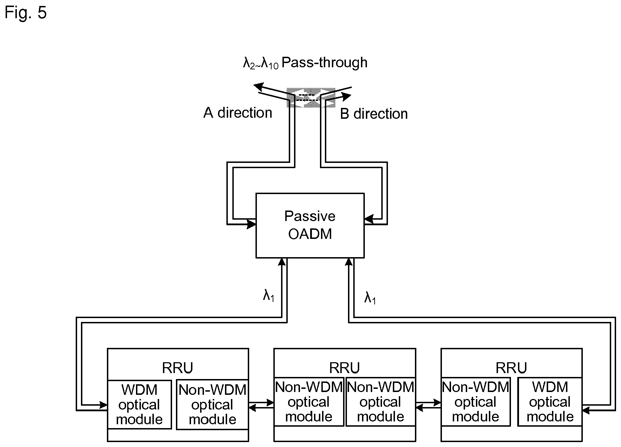

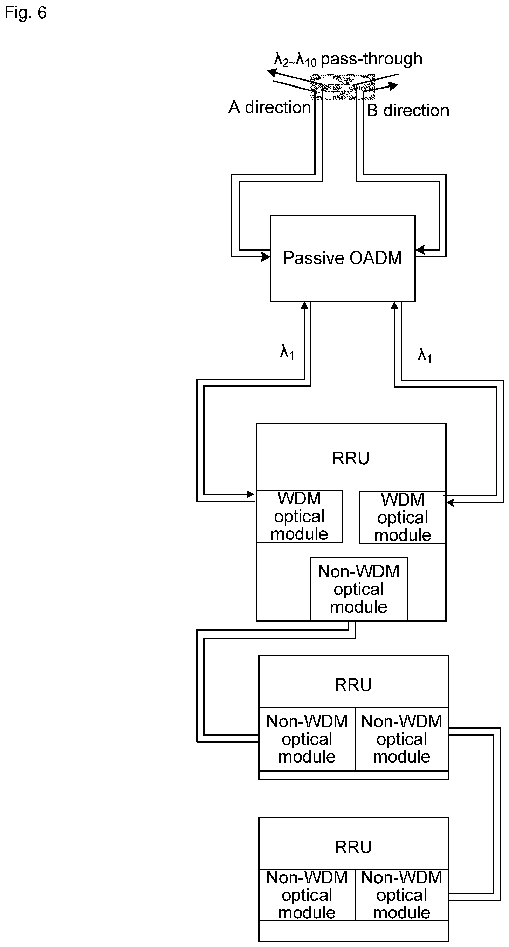

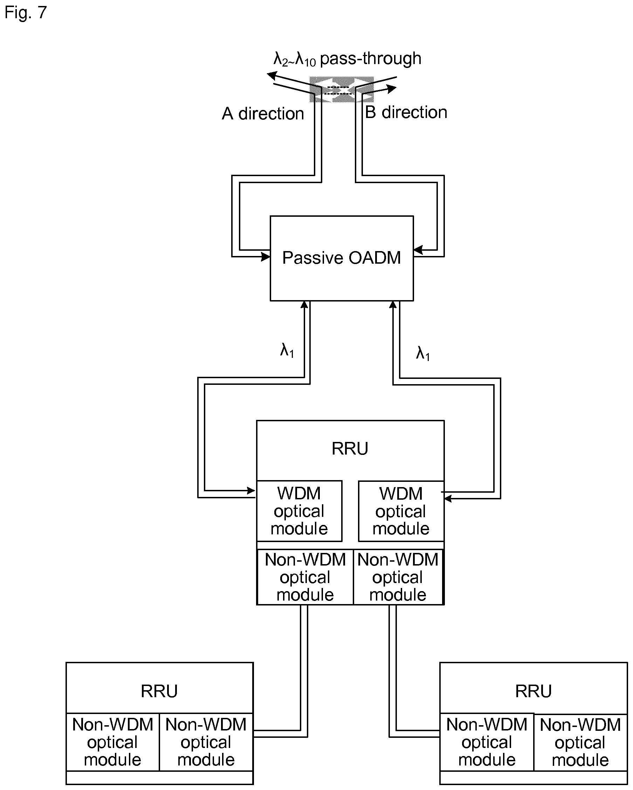

If multiple RRUs are connected into each site, the connection mode of the RRUs includes the ring structure, the chain structure and the tree structure, which enable the ring-ring structure, the ring-chain structure and the ring-tree structure to be achieved in the system. Fig. 5 is a schematic diagram of RRUs connected in a ring structure in an embodiment of the present disclosure. Fig. 6 is a schematic diagram of RRUs connected in a chain structure in an embodiment of the present disclosure. Fig. 7 is a schematic diagram of RRUs connected in a tree structure in an embodiment of the present disclosure.

As shown in Fig. 5, the first "ring" structure in the "ring-ring structure" here denotes the large ring structure of the system consisting of two OMD modules at the BBU side and the OADM module in each site, while the second "ring" structure denotes the ring structure, which is a small ring, consisting of the OADM module and all RRUs within each site. The "ring-ring structure" may also be referred to as a "large ring-small ring structure".

As shown in Fig. 6, the "ring" structure in the "ring-chain structure" denotes the large ring structure of the system consisting of two OMD modules at the BBU side and the OADM module in each site, while the "chain" structure denotes the chain structure consisting of the OADM module and all RRUs within each site.

As shown in Fig. 7, the "ring" structure in the "ring-tree structure" denotes the large ring structure of the system consisting of two OMD modules at the BBU side and the OADM module in each site, while the "tree" structure denotes the tree structure consisting of the OADM module and all RRUs within each site.

The color light signals of several wavelengths may be split by the OADM module in each site, and the optical signals of each wavelength are accessed into a group of RRUs. Namely, the number of the optical signals split by the OADM module is equal to that of the groups of cascaded RRUs. Fig. 8 is a schematic diagram of splitting optical signals with two wavelengths of λ1 and λ2 by an OADM module in an embodiment of the present disclosure. As shown in Fig. 8, the optical signals of the wavelengths of λ1 and λ2 are split by the OADM module, therefore two groups of the RRUs are cascaded in the ring network.

As shown in Fig. 4, the BBUs are connected with the RRUs of each site via two optical fibers of opposite flow directions, to form a ring topology network structure. Transmitted data between the BBUs and the RRUs are shared by the two optical fibers. In the downlink direction: the downlink data to be sent to the RRUs are split by each BBU to generate two parts of the electrical signals; and the two parts of the electrical signals are subjected to the electrical-optical conversion, and then are transmitted to the RRUs via the two optical fibers of opposite flow directions. In the uplink direction: the uplink data to be sent to the BBUs are split by each RRU to generate two parts of the electrical signals; and the two parts of the electrical signals are subjected to the electrical-optical conversion, and then are transmitted to the BBUs via the two optical fibers of opposite flow directions. During the process of transmission, if a failure occurs on one optical fiber, i.e., the optical signals cannot be transmitted by this optical fiber, then all uplink data to be transmitted by the BBUs and RRUs are automatically switched onto another normal optical fiber. Namely, when a failure occurs on an optical fiber, the data transmitted by the two optical fibers originally will be transmitted via another optical fiber.

With the technical solutions in the embodiments of the present disclosure, by means of RRUs cascading and WDM techniques, the RRUs in more than two sites are concatenated, and one wavelength is shared by the concatenated RRUs. By means of configuring wavelengths appropriately and concatenating the symmetric sites including RRUs, the number of the concatenated sites may be increased exponentially, so that the problem that the number of the concatenated sites is limited resulting from the relatively large insertion loss due to the excessive concatenated OADM modules in an optical fiber ring network in the related art are solved, and the difficulties induced by the scarce duct optical cable resources can be overcome effectively, thus utilizing optical fiber resources more efficiently and alleviating the difficulties to networking brought by the scarce optical cable resources effectively. In addition, in the embodiments of the present disclosure, the optical signals are divided into two parts and transmitted via the two optical fibers of opposite flow directions, and thus the bandwidth in the optical fiber links can be expanded.

### Method embodiments

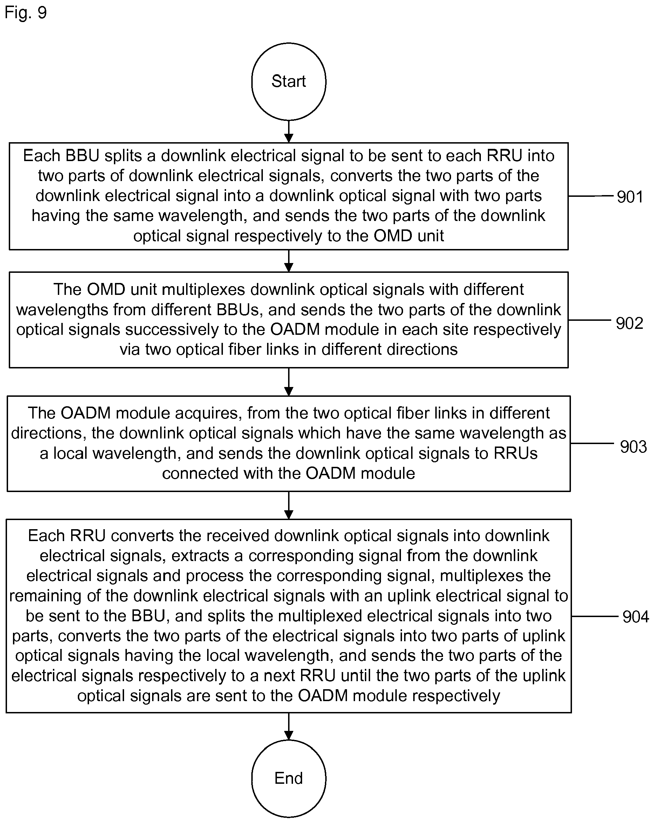

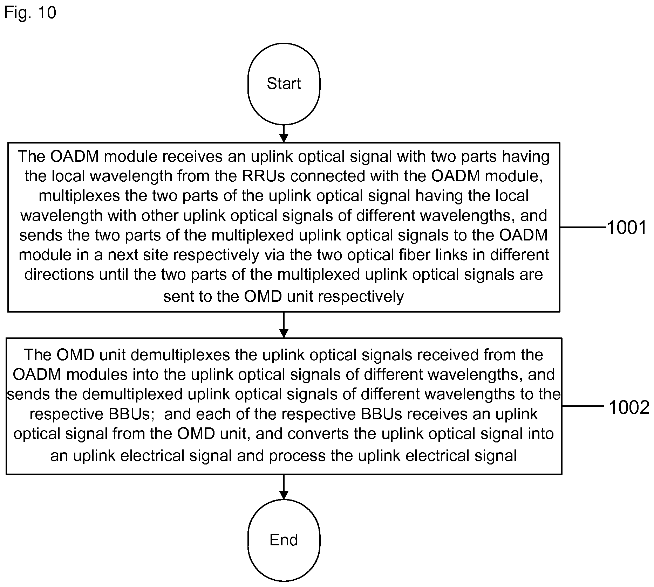

According to an embodiment of the present disclosure, a data interaction method used for the above data interaction system is provided. Fig. 9 is a flow chart of a data interaction method in a downlink direction in an embodiment of the present disclosure. Fig. 10 is a flow chart of a data interaction method in a downlink direction in an embodiment of the present disclosure. As shown in Figs. 9 and 10, the data interaction method according to the embodiment of the present disclosure may include the following processing.

### Downlink direction:

Step 901: Each BBU splits a downlink electrical signal to be sent to each RRU into two parts of downlink electrical signals, converts the two parts of the downlink electrical signal into a downlink optical signal with two parts having the same wavelength, and sends the two parts of the downlink optical signal respectively to the OMD unit.

It should be noted that the wavelengths of downlink optical signals sent by respective BBUs in the BBU pool are different each other, while the wavelengths of downlink optical signals sent by the same BBU are the same. In addition, in a practical application, after the two parts of downlink electrical signals are converted into two parts of downlink optical signals of the same wavelength, it is needed to send the two parts of downlink optical signals respectively to two OMD units.

Step 902: The OMD unit multiplexes downlink optical signals with different wavelengths from different BBUs, and sends the two parts of the downlink optical signals successively to the OADM module in each site respectively via two optical fiber links in different directions.

Step 903: The OADM module acquires, from the two optical fiber links in different directions, the downlink optical signals which have the same wavelength as a local wavelength, and sends the downlink optical signals to RRUs connected with the OADM module.

In step 903, the OADM module may acquire, from the two optical fiber links in different directions, multiple downlink optical signals of different wavelengths which are the same as local wavelengths.

Step 904: Each RRU converts the received downlink optical signals into downlink electrical signals, extracts a corresponding signal from the downlink electrical signals and process the corresponding signal, multiplexes the remaining of the downlink electrical signals with an uplink electrical signal to be sent to the BBU, and splits the multiplexed electrical signals into two parts, converts the two parts of the electrical signals into two parts of uplink optical signals having the local wavelength, and sends the two parts of the electrical signals respectively to a next RRU until the two parts of the uplink optical signals are sent to the OADM module respectively.

### Uplink direction:

Step 1001: The OADM module receives an uplink optical signal with two parts having the local wavelength from the RRUs connected with the OADM module, multiplexes the two parts of the uplink optical signal having the local wavelength with other uplink optical signals of different wavelengths, and sends the two parts of the multiplexed uplink optical signals to the OADM module in a next site respectively via the two optical fiber links in different directions until the two parts of the multiplexed uplink optical signals are sent to the OMD unit respectively.

In step 1001, the process that the OADM module multiplexes the two parts of the uplink optical signal having the local wavelength with other uplink optical signals of different wavelengths specifically includes: the OADM module multiplexes the multiple uplink optical signals of different wavelengths which are the same as local wavelengths with other uplink optical signals of different wavelengths.

Step 1002: The OMD unit demultiplexes the uplink optical signals received from the OADM modules into the uplink optical signals of different wavelengths, and sends the demultiplexed uplink optical signals of different wavelengths to corresponding BBUs; and each of the respective BBUs receives an uplink optical signal from the OMD unit, and converts the uplink optical signal into an uplink electrical signal and process the uplink electrical signal.

In the embodiments of the present disclosure, optical signals exchanged between the RRUs connected with the OADM module and the OADM module are color light signal, and optical signals exchanged among RRUs are white light signals; in each of the sites, multiple RRUs use a same wavelength or mutually different wavelengths, and a same RRU uses a same wavelength in the two optical fiber links in different directions; and in each of the sites, a connection mode among the OADM module and the multiple RRUs includes: a ring structure, a chain structure, and a tree structure.

Preferably, in the embodiments of the present disclosure, in the case that a failure occurs on one of the two optical fiber links in different directions, another optical fiber link is utilized automatically for data transmission.

The aforementioned technical solutions in the embodiments of the present disclosure are elaborated below.

Step 1: Two OMD modules for wavelength division multiplexing are set on a BBU side, and one OADM module and RRUs connected with the OADM module are set in each site; and the BBUs and the RRUs are connected into a ring topology network with the two OMD modules for wavelength division multiplexing and the OADM module in each site via two optical fiber links of opposite flow directions.

Specifically, in Step 1, the BBUs are centrally arranged, and thus may share baseband processing resources conveniently. The centrally arranged BBUs are connected with both ends of the optical fibers via a A-direction optical interface and a B-direction optical interface of an OMD unit for wavelength division multiplexing to form a ring topology network; and each optical fiber may be connected with multiple OADM modules. Both the BBUs are connected with the A-direction optical interface and the B-direction optical interface of the OADM modules through the two optical fiber links in the manner of opposite directions.

Step 2: Downlink electrical signals sent from the BBUs to each of the RRUs are converted into optical signals of different wavelengths, and the optical signals of different wavelengths are sent respectively to the two OMD modules for wavelength division multiplexing.

Specifically, in Step 2, a part of the downlink optical signals of different wavelengths are multiplexed by one of the OMD modules, and then are sent step by step to the A-direction optical interface of the OADM module in each site via one optical fiber link; and another part of the downlink optical signals are multiplexed by another of the OMD modules, and then are sent step by step to the B-direction optical interface of the OADM module in each site via another optical fiber link. Namely, transmission of the optical signals is shared by the two fiber links (also referred to as load sharing). With regard to the downlink optical signals from the BBUs, one part of the downlink optical signals are sent step by step to the A-direction optical interface of the OADM module in each site via one of the optical fiber links; and the remaining part of the downlink optical signals are sent step by step to the B-direction optical interface of the OADM module in each site via another of the optical fiber links along the opposite direction.

Step 3: Optical signals having the same wavelength as a local wavelength are extracted by each OADM module from the A-direction and B-direction optical interfaces, and are sent to the RRUs; and the RRU converts the optical signals having corresponding wavelengths into electrical signals through a wavelength division multiplexing (WDM) optical module.

Specifically, in Step 3, the following processing is included.

Step 31: The downlink optical signals from the BBUs are sent to each OADM module via the two optical fiber links; the OADM module extracts, from the received optical signals, optical signals whose wavelengths are matched with that of the OADM module, sends them to RRUs, and then the OADM module sends the remaining of the optical signals to a next OADM having the same wavelength as the remaining of the optical signals; and then Steps 32 and 33 are performed.

Step 32: The downlink optical signals output by the B-direction optical interface of the OADM module are sent to one RRU, and are converted into electrical signals by the WDM optical module of the RRU; the WDM optical module of the RRU extracts the corresponding electrical signals, and after multiplexing the remaining of the electrical signals with uplink electrical signals to be sent from the RRU to the BBU, the WDM optical module of the RRU converts the multiplexed electrical signals into optical signals of the local wavelength and sends the optical signals of the local wavelength to a next RRU; the same operation is performed by the next RRU until the optical signals are re-sent to the A-direction optical interface of the OADM module; and the optical signals received from the RRUs are multiplexed with optical signals of other wavelengths by the OADM module, and then are sent to the OADM module in the next site.

Step 33: The downlink optical signals output by the A-direction optical interface of the OADM module are sent to one RRU, and are converted into electrical signals by the optical module of the RRU; the optical module of the RRU extracts the corresponding electrical signals, and after multiplexing the remaining of the electrical signals with uplink electrical signals to be sent from the RRU to the BBU, the optical module of the RRU converts the multiplexed electrical signals into optical signals of the local wavelength and sends the optical signals of the local wavelength to a next RRU; the same operation is performed by the next RRU until the optical signals are re-sent to the B-direction optical interface of the OADM module; and the optical signals received from the RRUs are multiplexed with optical signals of other wavelengths by the OADM module, and then are sent to the OADM module in the next site.

Step 4: The uplink electrical signals are converted into uplink optical signals of local wavelength by each RRU, then sent to the local OADM module, and multiplexed with the optical signals on the optical fiber links, and the combined optical signals are sent to the next OADM module; and the same operation is performed by the next OADM module until the optical signals are sent to the BBUs.

Specifically, in Step 4, the following processing is included.

Step 41: The uplink electrical signals to be sent to the BBUs are split into two parts by each RRU, converted into uplink optical signals of the local wavelength, and sent to the OADM module respectively via the A-direction optical interface and the B-direction optical interface.

Step 42: The uplink optical signals of the local wavelength are multiplexed with the optical signals of other wavelengths received from the A-direction optical interface by the OADM module, and the multiplexed uplink optical signals are sent to the next OADM module via its B-direction optical interface along one optical fiber link, until the uplink optical signals are sent to the A-direction optical interface of the OMD module and are finally sent to the BBUs.

Step 43: The uplink optical signals of the local wavelength are multiplexed with the optical signals of other wavelengths received from the B-direction optical interface by the OADM module, and the multiplexed uplink optical signals are sent to the next OADM module via its A-direction optical interface along another optical fiber link, until the uplink optical signals are sent to the B-direction optical interface of the OMD module and are finally sent to the BBUs.

Step 44: The uplink optical signals received by two respective OMD modules are demultiplexed into optical signals of different wavelengths by the two OMD modules, and are sent to corresponding BBUs. Each of the OMD modules may be a CWDM or a DWDM.

It may be seen from the above processing that, in the embodiments of the present disclosure, the optical wavelengths allocated for the RRUs are available wavelengths stipulated in the International Telecommunication Union standards. The same optical wavelength used for carrying data is allocated for the same RRU in two optical fiber links. Optical signals having one or more wavelengths may be extracted from or added into the OADM module in each site, and sent to the RRUs in the local site.

In addition, in the structure of the ring topology network in the embodiments of the present disclosure, multiple OADM modules may be connected, and the optical signals of the same wavelength may be accessed into the multiple OADM modules (sites). Namely, the OADM modules are divided into several groups, each group having one or more OADM modules, into which the optical signals with the same wavelength can be accessed.

In the embodiments of the present disclosure, the multiple OADM modules, into which the optical signals with the same wavelength are accessed, are concatenated by means of symmetric sites, and thus may effectively improve the limitation to the accessed sites due to the insertion loss of the OADM modules, so that the number of the sites concatenated in the system may be increased exponentially. Preferably, the OADM modules, into which the optical signals with the same wavelength can be accessed, may be concatenated in the ring topology network in an equally spaced way. Specifically, the optical fiber ring links are evenly divided based on the number of the sites, and one OADM module with the same wavelength is concatenated in each segment, and thus the OADM modules with the same wavelengths are distributed in the ring topology network in the equally spaced way. The design of the symmetric sites may enable the number of the concatenated RRU sites to be increased exponentially, namely, the number of the sites may be doubled in the case that two symmetric sites are concatenated, and the site number may be increased to N times in the case that N symmetric sites are concatenated.

Furthermore, the optical signals that are input or output by the RRUs connected with the optical interface of the OADM module in each site are color light signals, and the optical signals input or output by the other RRUs are white light signals.

The optical signals of one or more wavelengths may be extracted out of or added into the OADM module in each site. If the optical signals of multiple wavelengths are extracted or added, then different wavelengths of the optical signals are applied to the multiple RRUs connected with the OADM module, i.e., optical signals of only one wavelength are accessed into one RRU. In other words, one optical wavelength for carrying data may be allocated for each RRU, and the optical wavelengths used by all RRUs in each site may be different from each other.

Each site may support the access of the optical signals of multiple different wavelengths, and each optical wavelength may support one type of network in each site, thus simplifying the system design. For example, three wavelengths may be accessed into one site, then the system in the embodiments of the present disclosure may support three types of networks such as a Global System of Mobile communication (GSM) network, a Wideband Code Division Multiple Access (WCDMA) network, and a Long Term Evolution (LTE) network. The more wavelengths are accessed, the more types of networks are supported by the site.

In the embodiments of the present disclosure, the OADM module is connected with the RRUs via the optical fibers, and a ring structure may be used as the connection mode, i.e., the structure that small rings are nested in a large ring is used in the system, which makes protection ability of the overall system stronger. The large ring is the ring topology network consisting of the OMD modules and the OADM module in each site, and the small ring is the ring topology network consisting of each OADM module and the RRUs within the site in which the OADM module is located. A tree-structure or a chain-structure may also be used in the RRUs within each site.

The processes that the optical signals are processed by each OADM module and the RRUs are explained as follows.
1) Optical signals of one wavelength are split by OADM module, and are converted into electrical signals through a WDM optical module within one RRU; and the corresponding electrical signals are extracted by the RRU, and the remaining of the electrical signals are converted into white light signals through a non-WDM optical module and then sent to the non-WDM optical module of a next RRU.
2) If the next RRU is connected with the OADM module, then after the electrical signals passing through the non-WDM optical module are processed by the RRU, the electrical signals are converted into optical signals of the same wavelength as the OADM module through the WDM optical module, multiplexed and sent to the OADM module of a next site.
3) If the next RRU is not connected with the OADM module, then the optical signals output or input by the RRU are white light signals, i.e., both the electrical-optical conversion and the optical-electrical conversion are performed through the non-WDM optical module. This operation is repeated by a next RRU until the RRU is connected with the OADM module, and Step 2) is executed.
4) Optical signals having more than one wavelengths are split by the OADM module, then optical signals corresponding to each wavelength are accessed into the RRU through different optical fibers; steps 1) to 3) are performed on the optical signals corresponding to each wavelength, and the optical signals of different wavelengths that are recovered by the WDM optical module are sent to the OADM module, multiplexed with optical signals of other wavelengths, and then sent to the OADM module of the next site.

In the embodiments of the present disclosure, the uplink electrical signals are converted into the optical signals of the local wavelength by the RRUs of each site by means of electrical regeneration, multiplexed with optical signals of other wavelengths in the site, and then sent to the next site via another optical interface of the RRUs.

Specifically, the uplink electrical signals are multiplexed by the RRU with the uplink data sent from a previous RRU, then subjected to the electrical-optical conversion of the optical module and sent to a next optical module. If the next optical access point of the RRU is still a RRU, then the signals are converted into white light signals using the non-WDM optical module and sent to the next RRU. If the next optical access point of the RRU is an OADM module, then the signals are converted by the WDM optical module into color light signals having the same optical wavelength as that of the OADM module, and sent to the OADM module. The color light signals are multiplexed with the optical signals of other wavelengths, and sent to the OADM module of the next site. The above processing is repeated until the uplink data are sent to the OMD modules and finally sent to the BBUs.

In the embodiments of the present disclosure, the OMD modules at the BBU side are connected with the OADM module in each site via two optical fibers of opposite flow directions to form a ring topology network. The bandwidth for carrying data between the BBUs and the RRUs is shared by the two optical fibers. A load sharing mechanism in both uplink direction and downlink direction is elaborated below.

### 1. Load sharing mechanism in the downlink direction:

The downlink electrical signals to be sent to the RRUs are split into two parts by each BBU, and are converted into two parts of optical signals of corresponding wavelengths respectively; and one part of the two parts of optical signals are sent to one OMD module via the A-direction optical interface, and another part of the two parts of optical signals are sent to another OMD module via the B-direction optical interface.

All the downlink optical signals in A direction are multiplexed by the OMD module transmitting the downlink optical signals in A direction, are output via the B-direction optical interface and are sent to the A-direction optical interface of the OADM module in each site of the ring network via an optical fiber link; and all the downlink optical signals in B direction are multiplexed by the OMD module transmitting the downlink optical signals in B direction, are output via the A-direction optical interface and are sent to the B-direction optical interface of the OADM module in each site of the ring network via another optical fiber link.

The downlink optical signals having the wavelengths allocated by each OADM module are extracted by the OADM module from the downlink optical signals received through the A-direction optical interface and the B-direction optical interface, and are sent to the RRUs; and the downlink optical signals of both the two links from the OADM module are converted into electrical signals by each RRU, and the RRU extracts the data of the RRU, and multiplexes the data with the extracted electrical signals to recover the original data from the BBU.

### 2. Load sharing mechanism in the uplink direction:

The uplink electrical signals to be sent to the BBUs are split into two parts by each RRU, and are converted into two parts of optical signals of corresponding wavelengths respectively; and one part of the two parts of optical signals are sent to the OADM module via the A-direction optical interface, multiplexed with the optical signals of other wavelengths from the A-direction optical interface, and output to the OADM module of the next site via the B-direction optical interface, until they are sent to one of the OMD modules at the BBU side. Another part of the two parts of optical signals are sent to the OADM module via the B-direction optical interface, multiplexed with the optical signals of other wavelengths from the B-direction optical interface, and output to the OADM module of the next site via the A-direction optical interface, until they are sent to another OMD module at the BBU side.

The uplink optical signals from each RRU are demultiplexed by the two OMD modules at the BBU side from the received downlink optical signals in the A direction and the B direction, and are sent to the corresponding BBUs; and the uplink optical signals of both links of each RRU from the two OMD modules are converted by the BBU into the electrical signals and synchronously processed, and the electrical signals of both links are multiplexed by each BBU to recover the uplink data.

In the embodiments of the present disclosure, if a failure occurs on one of the two optical fiber links for forming the ring topology network such that data cannot be transmitted, then the data transmitted in the system may be automatically switched onto another normal optical fiber link.

### 1. Downlink direction:

Data are split into two parts by each BBU based on the two optical fibers, and are transmitted to the RRUs via the two optical fibers. During the process of transmission, information for indicating that the data are received by the RRUs is received by the BBU. If the information is not received in either of the two directions, it means that a failure occurs on the optical fiber link in this direction, then the exception handling mechanism is initiated automatically by the BBU, namely, all downlink data are transmitted via the normal optical fiber link.

### 2. Uplink direction:

Data are split into two parts by each RRU based on the two optical fibers, and are transmitted to the BBUs via the two optical fibers. During the process of transmission, information for indicating that the data are received by the BBUs is received by the RRU. If the information is not received in either of the two directions, it means that a failure occurs on the optical fiber link in this direction, then the exception handling mechanism is initiated automatically by the RRUs, namely, all uplink data are transmitted via the normal optical fiber link.

The technical solutions in the embodiments of the present disclosure are illustrated below by reference to the accompanying drawings.

As shown in Fig. 4, by means of three cascaded symmetric sites, the number of the accessed sites may triple. It is assumed that 10 sites may be supported at most by the ring network in the system without the technical solutions in the embodiments of the present disclosure in the related art. However, as shown in Fig. 4, up to 30 sites may be supported by the network in the system with the technical solutions in the embodiments of the present disclosure. In Fig. 4, OADMn denotes that optical signals having a wavelength of An are added or split by an OADM. For example, OADM1 in the figure denotes that optical signals having a wavelength of λ1 are added or split by the OADM.

In the embodiments of the present disclosure, WDM techniques may be a solution containing BBU/RRU plus color light interface and external optical multiplexer/demultiplexer, and may also be a solution containing BBU/RRU and external WDM devices. The applied WDM techniques may be CWDM techniques, and may also be DWDM techniques. The "WDM optical module" in Fig. 4 may be a CWDM module or a DWDM module.

The same wavelength is used for the sites having the same reference numbers in uplink and downlink. For example, the same wavelength of λ1 is used for the three sites having the reference number of 1 in uplink and downlink. Since the OADM1 is passed, the insertion loss is approximately 2dB for the through optical signals of other wavelengths. However, the insertion loss resulting from passing through other OAMD modules may be recovered after the split optical signals of the wavelength λ1 are subjected to the optical-electrical conversion and the electrical-optical conversion. In this way, the optical signals of respective wavelength are subject to the OADM insertion loss for at most ten times. After the optical signals of respective wavelength are subject to the OADM insertion loss for nine times, if the optical signals of respective wavelength are accessed into the OADM having the same wavelength as that of the optical signals at the tenth time, then the power budget problem of the optical signals may be solved, and thus the available number of the sites in each site may be effectively increased.

If multiple RRUs are connected into each site, the connection mode of the RRUs includes the ring structure, the chain structure and the tree structure, which enable the ring-ring structure, the ring-chain structure and the ring-tree structure to be achieved in the system.

As shown in Fig. 5, the first "ring" structure in the "ring-ring structure" here denotes the large ring structure of the system consisting of two OMD modules at the BBU side and the OADM module in each site, while the second "ring" structure denotes the ring structure, which is a small ring, consisting of the OADM module and all RRUs within each site. The "ring-ring structure" may also be referred to as a "large ring-small ring structure".

As shown in Fig. 6, the "ring" structure in the "ring-chain structure" denotes the large ring structure of the system consisting of two OMD modules at the BBU side and the OADM module in each site, while the "chain" structure denotes the chain structure consisting of the OADM module and all RRUs within each site.

As shown in Fig. 7, the "ring" structure in the "ring-tree structure" denotes the large ring structure of the system consisting of two OMD modules at the BBU side and the OADM module in each site, while the "tree" structure denotes the tree structure consisting of the OADM module and all RRUs within each site.

The color light signals of several wavelengths may be split by the OADM module in each site, and the optical signals of each wavelength are accessed into a group of RRUs. Namely, the number of the optical signals split by the OADM module is equal to that of the groups of cascaded RRUs. As shown in Fig. 8, the optical signals of the wavelengths of λ1 and λ2 are split by the OADM module, therefore two groups of the RRUs are cascaded in the ring network.

As shown in Fig. 4, the BBUs are connected with the RRUs of each site via two optical fibers of opposite flow directions, to form a ring topology network structure. Transmitted data between the BBUs and the RRUs are shared by the two optical fibers. In the downlink direction: the downlink data to be sent to the RRUs are split by each BBU to generate two parts of the electrical signals; and the two parts of the electrical signals are subjected to the electrical-optical conversion, and then are transmitted to the RRUs via the two optical fibers of opposite flow directions. In the uplink direction: the uplink data to be sent to the BBUs are split by each RRU to generate two parts of the electrical signals; and the two parts of the electrical signals are subjected to the electrical-optical conversion, and then are transmitted to the BBUs via the two optical fibers of opposite flow directions. During the process of transmission, if a failure occurs on one optical fiber, i.e., the optical signals cannot be transmitted by this optical fiber, then all uplink data to be transmitted by the BBUs and RRUs are automatically switched onto another normal optical fiber. Namely, when a failure occurs on an optical fiber, the data transmitted by the two optical fibers originally will be transmitted via another optical fiber.

With the technical solutions in the embodiments of the present disclosure, by means of RRUs cascading and WDM techniques, the RRUs in more than two sites are concatenated, and one wavelength is shared by the concatenated RRUs. By means of configuring wavelengths appropriately and concatenating the symmetric sites including RRUs, the number of the concatenated sites may be increased exponentially, so that the problem that the number of the concatenated sites is limited resulting from the relatively large insertion loss due to the excessive concatenated OADM modules in an optical fiber ring network in the related art are solved, and the difficulties induced by the scarce duct optical cable resources can be overcome effectively, thus utilizing optical fiber resources more efficiently and alleviating the difficulties to networking brought by the scarce optical cable resources effectively. In addition, in the embodiments of the present disclosure, the optical signals are divided into two parts and transmitted via the two optical fibers of opposite flow directions, and thus the bandwidth in the optical fiber links can be expanded.

Although the preferred embodiments of the present disclosure have been disclosed for the purpose of demonstration, it will be appreciated by those skilled in the art that various improvements, additions and replacements are possible. Therefore, the scope of protection of the claims of the present disclosure should not be limited to the above embodiments.

## Claims

1. A data interaction system, comprising: a Base Band Unit, BBU, pool (30), an Optical Multiplexer/Demultiplexer, OMD, unit (32) and multiple sites (34),
wherein the BBU pool (30) comprises one or more BBUs (300), the OMD unit (32) comprises two OMD modules (320), each of the sites (34) comprises an Optical Add-Drop Multiplexer, OADM, module (340) and one or more Radio Remote Units, RRUs (342); the BBU pool (30) is connected to the OMD unit (32), the OADM module (340) in each of the sites is connected with the two OMD modules (320) of the OMD unit (32) via two optical fiber links in different directions, each of the OADM modules (340) is connected with the one or more RRUs (342) via the two optical fiber links in different directions, and the BBU pool (30) and the sites (34) are concatenated into a ring topology network;
the sites (34) are divided into multiple site groups, and sites in each of the multiple site groups use a same wavelength and are uniformly distributed in the ring topology network; wherein the number of sites between two adjacent sites of a same site group is less than a maximum number of concatenated sites using different wavelengths in the ring topology network;
each of the one or more BBUs (300) is configured to: split a downlink electrical signal to be sent to each RRU into two parts, convert the two parts of the downlink electrical signal into a downlink optical signal with two parts having a same wavelength, and send the two parts of the downlink optical signal to the OMD unit; and receive an uplink optical signal from the OMD unit, and convert the uplink optical signal into an uplink electrical signal and process the uplink electrical signal;
the OMD unit (32) is configured to: multiplex downlink optical signals of different wavelengths from different BBUs of the one or more BBUs, and send the two parts of the downlink optical signal to the OADM module in each of the sites separately via the two optical fiber links in different directions via the two OMD modules respectively; and demultiplex the uplink optical signal received from the OADM module into uplink optical signals of different wavelengths, and send the demultiplexed uplink optical signals of different wavelengths to corresponding BBUs;
the OADM module (340) in each of the sites is configured to: acquire, from the two optical fiber links in different directions, downlink optical signals which have the same wavelength as a local wavelength, and send the downlink optical signals to RRUs connected with the OADM module; and receive an uplink optical signal with two parts having the local wavelength from the RRUs connected with the OADM module, multiplex the two parts of the uplink optical signal having the local wavelength with other uplink optical signals of different wavelengths, and send the two parts of the multiplexed uplink optical signals to the OADM module of a next site respectively via the two optical fiber links in different directions until the two parts of the multiplexed uplink optical signals are sent to the OMD unit via the two OMD modules respectively; and
each of the one or more RRUs (342) is configured to: convert the received downlink optical signals into downlink electrical signals, extract a corresponding signal from the downlink electrical signals and process the corresponding signal, multiplex the remaining of the downlink electrical signals with an uplink electrical signal to be sent to a BBU of the one or more BBUs, split the multiplexed electrical signals into two parts, convert the two parts of the electrical signals into two parts of uplink optical signals having the local wavelength, and send the two parts of the uplink optical signals having the local wavelength respectively via the two optical fiber links in the different directions to a next RRU of the one or more RRUs until the two parts of the uplink optical signals are sent to the OADM module.

2. The system according to claim 1, wherein the OADM module (340) in peach of the sites is configured to: acquire, from the two optical fiber links in different directions, multiple downlink optical signals having different wavelengths which are the same as local wavelengths, and multiplex the multiple downlink optical signals of different wavelengths with other uplink optical signals of different wavelengths.

3. The system according to claim 1, wherein optical signals exchanged between the RRUs (342) connected with the OADM module and the OADM module (340) are color light signals, and each optical signal exchanged among the RRUs (342) are white light signals.

4. The system according to claim 2, wherein in each of the sites (34), multiple RRUs use a same wavelength or mutually different wavelengths, and a same RRU uses a same wavelength in the two optical fiber links in different directions.

5. The system according to claim 1, wherein in each of the sites (34), a connection mode among the OADM module (340) and the multiple RRUs (342) comprises: a ring structure, a chain structure, and a tree structure.

6. The system according to any one of claims 1 to 5, further comprising:
an auto-switching module configured to, in the case that a failure occurs on one of the two optical fiber links in different directions, use another optical fiber link automatically for data transmission.

7. A data interaction method used in a system including a Base Band Unit, BBU, pool, an Optical Multiplexer/Demultiplexer, OMD, unit and multiple sites, the BBU pool comprising one or more BBUs, the OMD unit comprising two OMD modules, each of the sites comprising an Optical Add-Drop Multiplexer, OADM module, and one or more Radio Remote Units, RRUs, the BBU pool being connected to the OMD unit, the OADM module in each of the sites being connected with the two OMD modules of the OMD unit via two optical fiber links in different directions, each of the OADM modules being connected with the one or more RRUs via the two optical fiber links in different directions, and the BBU pool and the sites being concatenated into a ring topology network, the method comprising:
by each of the one or more Base Band Units, BBUs, splitting a downlink electrical signal to be sent to each of the one or more RRUs into two parts of downlink electrical signals, converting the two parts of the downlink electrical signal into a downlink optical signal with two parts having a same wavelength, and sending the two parts of the downlink optical signal to the OMD unit (S901);
by the OMD unit, multiplexing downlink optical signals of different wavelengths from different BBUs of the one or more BBUs, and sending the two parts of the downlink optical signals to the OADM module in each site separately via two optical fiber links in different directions via the two OMD modules respectively (S902);
by the OADM module in each of the sites, acquiring, from the two optical fiber links in different directions, downlink optical signals which have the same wavelength as a local wavelength, and sending the downlink optical signals to the one or more RRUs connected with the OADM module (S903);
by each of the one or more RRUs, converting the received downlink optical signals into downlink electrical signals, extracting a corresponding signal from the downlink electrical signals and process the corresponding signal, multiplexing the remaining of the downlink electrical signals with an uplink electrical signal to be sent to a BBU of the one or more BBUs, splitting the multiplexed electrical signals into two parts, converting the two parts of the electrical signals into two parts of uplink optical signals having the local wavelength, and sending the two parts of the uplink optical signals having the local wavelength respectively via the two optical fiber links in different directions to a next RRU of the one or more RRUs until the two parts of the uplink optical signals are sent to the OADM module (S904); and
by the OADM module in each of the sites, receiving an uplink optical signal with two parts having the local wavelength from the one or more RRUs connected with the OADM module, multiplexing the two parts of the uplink optical signal having the local wavelength with other uplink optical signals of different wavelengths, and sending the two parts of the multiplexed uplink optical signals to the OADM module in a next site respectively via the two optical fiber links in different directions until the two parts of the multiplexed uplink optical signals are sent to the OMD unit via the two OMD modules respectively (S1001);
by the OMD unit, demultiplexing the uplink optical signal received from the OADM module into uplink optical signals of different wavelengths, and sending the demultiplexed uplink optical signals of different wavelengths to corresponding BBUs; and by each of the one or more BBUs, receiving an uplink optical signal from the OMD unit, and converting the uplink optical signal into an uplink electrical signal and processing the uplink electrical signal (S1002).

8. The method according to claim 7, wherein the acquiring, by the OADM module in each of the sites, downlink optical signals which have the same wavelength as a local wavelength from the two optical fiber links in different directions comprises: acquiring, by the OADM module from the two optical fiber links in different directions, multiple downlink optical signals of different wavelengths which are the same as local wavelengths; and
the multiplexing, by the OADM module, the two parts of the uplink optical signals having the local wavelength with other uplink optical signals of different wavelengths comprises: multiplexing, by the OADM module, the multiple uplink optical signals of different wavelengths which are the same as local wavelengths with other uplink optical signals of different wavelengths.

9. The method according to claim 8, wherein
optical signals exchanged between the RRUs connected with the OADM module and the OADM module are color light signals, and each optical signal exchanged among the RRUs are white light signals;
in each of the sites, multiple RRUs use a same wavelength or mutually different wavelengths, and a same RRU uses a same wavelength in the two optical fiber links in different directions; and
in each of the sites, a connection mode among the OADM module and the multiple RRUs comprises: a ring structure, a chain structure, and a tree structure.

10. The method according to claim 7, 8 or 9, further comprising:
in the case that a failure occurs on one of the two optical fiber links in different directions, using another optical fiber link automatically for data transmission.

## Patentansprüche

1. Dateninteraktionssystem, umfassend: einen Pool von Basisbandeinheiten (Base Band Units)(30), eine optische Multiplexer/Demultiplexer-(OMD-)Einheit (32) und mehrere Standorte (34),
wobei der BBU-Pool (30) eine oder mehrere BBUs (300) umfasst, die OMD-Einheit (32) zwei OMD-Module (320) umfasst, jeder der Standorte (34) ein optisches Add-Drop-Multiplexer-(OADM-)Modul (340) und eine oder mehrere Funkferneinheiten (Remote Radio Units)(342) umfasst, der BBU-Pool (30) mit der OMD-Einheit (32) verbunden ist, das OADM-Modul (340) in jedem der Standorte über zwei Glasfaserverbindungen in verschiedenen Richtungen mit den zwei OMD-Modulen (320) der OMD-Einheit (32) verbunden ist, jedes der OADM-Module (340) über die zwei Glasfaserverbindungen in verschiedenen Richtungen mit der einen oder den mehreren RRUs (342) verbunden ist und der BBU-Pool (30) und die Standorte (34) zu einem Netzwerk mit Ringtopologie verknüpft sind,
die Standorte (34) in mehrere Standortgruppen unterteilt sind und Standorte in jeder der mehreren Standortgruppen dieselbe Wellenlänge nutzen und gleichmäßig in dem Netzwerk mit Ringtopologie verteilt sind, wobei die Anzahl von Standorten zwischen zwei benachbarten Standorten derselben Standortgruppe geringer ist als eine maximale Anzahl verknüpfter Standorte in dem Netzwerk mit Ringtopologie, die unterschiedliche Wellenlängen nutzen,
jede der einen oder der mehreren BBUs (300) für Folgendes konfiguriert ist: Teilen eines elektrischen Abwärtsstreckensignals, das an jede RRU zu senden ist, in zwei Teile, Umwandeln der zwei Teile des elektrischen Abwärtsstreckensignals in ein optisches Abwärtsstreckensignal mit zwei Teilen, die dieselbe Wellenlänge aufweisen, und Senden der zwei Teile des optischen Abwärtsstreckensignals an die OMD-Einheit, und Empfangen eines optischen Aufwärtsstreckensignals von der OMD-Einheit und Umwandeln des optischen Aufwärtsstreckensignals in ein elektrisches Aufwärtsstreckensignal und Verarbeiten des elektrischen Aufwärtsstreckensignals,
die OMD-Einheit (32) für Folgendes konfiguriert ist: Multiplexen optischer Abwärtsstreckensignale verschiedener Wellenlängen von verschiedenen BBUs der einen oder der mehreren BBUs und Senden der zwei Teile des optischen Abwärtsstreckensignals an das OADM-Modul an jedem der Standorte separat über die zwei Glasfaserverbindungen in verschiedenen Richtungen über die zwei OMD-Module und Demultiplexen des optischen Aufwärtsstreckensignals, das von dem OADM-Modul empfangen wird, in optische Aufwärtsstreckensignale verschiedener Wellenlängen und Senden der gedemultiplexten optischen Aufwärtsstreckensignale verschiedener Wellenlängen an entsprechende BBUs,
das OADM-Modul (340) in jedem der Standorte für Folgendes konfiguriert ist: Erfassen von optischen Abwärtsstreckensignalen, die dieselbe Wellenlänge wie eine lokale Wellenlänge aufweisen, von den zwei Glasfaserverbindungen in verschiedenen Richtungen und Senden der optischen Abwärtsstreckensignale an RRUs, die mit dem OADM-Modul verbunden sind, und Empfangen eines optischen Aufwärtsstreckensignals mit zwei Teilen, die die lokale Wellenlänge aufweisen, von den RRUs, die mit dem OADM-Modul verbunden sind, Multiplexen der zwei Teile des optischen Aufwärtsstreckensignals, die die lokale Wellenlänge aufweisen, mit anderen optischen Aufwärtsstreckensignalen verschiedener Wellenlängen und Senden der zwei Teile der gemultiplexten optischen Aufwärtsstreckensignale an das OADM-Modul eines nächsten Standortes über die zwei Glasfaserverbindungen in verschiedenen Richtungen, bis die zwei Teile der gemultiplexten optischen Aufwärtsstreckensignale über die zwei OMD-Module an die OMD-Einheit gesendet wurden, und
jede der einen oder der mehreren RRUs (342) für Folgendes konfiguriert ist: Umwandeln der empfangenen optischen Abwärtsstreckensignale in elektrische Abwärtsstreckensignale, Extrahieren eines entsprechenden Signals aus den elektrischen Abwärtsstreckensignalen und Verarbeiten des entsprechenden Signals, Multiplexen der übrigen der elektrischen Abwärtsstreckensignale mit einem elektrischen Aufwärtsstreckensignal, um sie an eine BBU der einen oder der mehreren BBUs zu senden, Teilen der gemultiplexten elektrischen Signale in zwei Teile, Umwandeln der zwei Teile der elektrischen Signale in zwei Teile von optischen Aufwärtsstreckensignalen, die die lokale Wellenlänge aufweisen, und Senden der zwei Teile der optischen Aufwärtsstreckensignale, die die lokale Wellenlänge aufweisen, über die zwei Glasfaserverbindungen in den verschiedenen Richtungen an eine nächste RRU der einen oder der mehreren RRUs, bis die zwei Teile der optischen Aufwärtsstreckensignale an das OADM-Modul gesendet wurden.

2. System nach Anspruch 1, wobei das OADM-Modul (340) in jedem der Standorte für Folgendes konfiguriert ist:
Erfassen mehrerer optischer Abwärtsstreckensignale, die verschiedene Wellenlängen aufweisen, die gleich lokalen Wellenlängen sind, von den zwei Glasfaserverbindungen in verschiedenen Richtungen und Multiplexen der mehreren optischen Abwärtsstreckensignale verschiedener Wellenlängen mit anderen optischen Aufwärtsstreckensignalen verschiedener Wellenlängen.

3. System nach Anspruch 1, wobei optische Signale, die zwischen den RRUs (342), die mit dem OADM-Modul verbunden sind, und dem OADM-Modul (340) ausgetauscht werden, Farblichtsignale sind und jedes optische Signal, das zwischen den RRUs (342) ausgetauscht wird, ein Weißlichtsignal ist.

4. System nach Anspruch 2, wobei in jedem der Standorte (34) mehrere RRUs dieselbe Wellenlänge oder voneinander verschiedene Wellenlängen nutzen und dieselbe RRU dieselbe Wellenlänge in den zwei Glasfaserverbindungen in verschiedenen Richtungen nutzt.

5. System nach Anspruch 1, wobei in jedem der Standorte (34) ein Verbindungsmodus zwischen dem OADM-Modul (340) und den mehreren RRUs (342) Folgendes umfasst: eine Ringstruktur, eine Kettenstruktur und eine Baumstruktur.

6. System nach einem der Ansprüche 1 bis 5, ferner Folgendes umfassend:
ein Automatikumschaltmodul, das dafür konfiguriert ist, in dem Fall, dass ein Ausfall an einer der zwei Glasfaserverbindungen in verschiedenen Richtungen auftritt, automatisch eine andere Glasfaserverbindung zur Datenübertragung zu nutzen.

7. Dateninteraktionsverfahren, das in einem System verwendet wird, welches einen Pool von Basisbandeinheiten (Base Band Unit), eine optische Multiplexer/Demultiplexer-(OMD-)Einheit und mehrere Standorte beinhaltet, wobei der BBU-Pool eine oder mehrere BBUs umfasst, die OMD-Einheit zwei OMD-Module umfasst, jeder der Standorte ein optisches Add-Drop-Multiplexer-(OADM-)Modul und eine oder mehrere Funkferneinheiten (Remote Radio Units) umfasst, der BBU-Pool mit der OMD-Einheit verbunden ist, das OADM-Modul in jedem der Standorte über zwei Glasfaserverbindungen in verschiedenen Richtungen mit den zwei OMD-Modulen der OMD-Einheit verbunden ist, jedes der OADM-Module über die zwei Glasfaserverbindungen in verschiedenen Richtungen mit der einen oder den mehreren RRUs verbunden ist und der BBU-Pool und die Standorte zu einem Netzwerk mit Ringtopologie verknüpft sind, wobei das Verfahren Folgendes umfasst:
durch jede der einen oder der mehreren Basisbandeinheiten (BBUs), Teilen eines elektrischen Abwärtsstreckensignals, das an jede der einen oder der mehreren RRUs zu senden ist, in zwei Teile von elektrischen Abwärtsstreckensignalen, Umwandeln der zwei Teile des elektrischen Abwärtsstreckensignals in ein optisches Abwärtsstreckensignal mit zwei Teilen, die dieselbe Wellenlänge aufweisen, und Senden der zwei Teile des optischen Abwärtsstreckensignals an die OMD-Einheit (S901),
durch die OMD-Einheit, Multiplexen optischer Abwärtsstreckensignale verschiedener Wellenlängen von verschiedenen BBUs der einen oder der mehreren BBUs und Senden der zwei Teile der optischen Abwärtsstreckensignale an das OADM-Modul in jedem Standorte separat über die zwei Glasfaserverbindungen in verschiedenen Richtungen über die zwei OMD-Module (S902),
durch das OADM-Modul in jedem der Standorte, Erfassen von optischen Abwärtsstreckensignalen, die dieselbe Wellenlänge wie eine lokale Wellenlänge aufweisen, von den zwei Glasfaserverbindungen in verschiedenen Richtungen und Senden der optischen Abwärtsstreckensignale an die eine oder die mehreren RRUs, die mit dem OADM-Modul verbunden sind (S903),
durch jede der einen oder der mehreren RRUs, Umwandeln der empfangenen optischen Abwärtsstreckensignale in elektrische Abwärtsstreckensignale, Extrahieren eines entsprechenden Signals aus den elektrischen Abwärtsstreckensignalen und Verarbeiten des entsprechenden Signals, Multiplexen der übrigen der elektrischen Abwärtsstreckensignale mit einem elektrischen Aufwärtsstreckensignal, um sie an eine BBU der einen oder der mehreren BBUs zu senden, Teilen der gemultiplexten elektrischen Signale in zwei Teile, Umwandeln der zwei Teile der elektrischen Signale in zwei Teile von optischen Aufwärtsstreckensignalen, die die lokale Wellenlänge aufweisen, und Senden der zwei Teile der optischen Aufwärtsstreckensignale, die die lokale Wellenlänge aufweisen, über die zwei Glasfaserverbindungen in verschiedenen Richtungen an eine nächste RRU der einen oder der mehreren RRUs, bis die zwei Teile der optischen Aufwärtsstreckensignale an das OADM-Modul gesendet wurden (S904), und
durch das OADM-Modul in jedem der Standorte, Empfangen eines optischen Aufwärtsstreckensignals mit zwei Teilen, die die lokale Wellenlänge aufweisen, von der einen oder den mehreren RRUs, die mit dem OADM-Modul verbunden sind, Multiplexen der zwei Teile des optischen Aufwärtsstreckensignals, die die lokale Wellenlänge aufweisen, mit anderen optischen Aufwärtsstreckensignalen verschiedener Wellenlängen und Senden der zwei Teile der gemultiplexten optischen Aufwärtsstreckensignale an das OADM-Modul in einem nächsten Standort über die zwei Glasfaserverbindungen in verschiedenen Richtungen, bis die zwei Teile der gemultiplexten optischen Aufwärtsstreckensignale über die zwei OMD-Module an die OMD-Einheit gesendet wurden (S1001),
durch die OMD-Einheit, Demultiplexen des optischen Aufwärtsstreckensignals, das von dem OADM-Modul empfangen wird, in optische Aufwärtsstreckensignale verschiedener Wellenlängen und Senden der gedemultiplexten optischen Aufwärtsstreckensignale verschiedener Wellenlängen an entsprechende BBUs, und
durch jede der einen oder der mehreren BBUs, Empfangen eines optischen Aufwärtsstreckensignals von der OMD-Einheit und Umwandeln des optischen Aufwärtsstreckensignals in ein elektrisches Aufwärtsstreckensignal und Verarbeiten des elektrischen Aufwärtsstreckensignals (S1002).

8. Verfahren nach Anspruch 7, wobei das Erfassen von optischen Abwärtsstreckensignalen, die dieselbe Wellenlänge wie eine lokale Wellenlänge aufweisen, von den zwei Glasfaserverbindungen in verschiedenen Richtungen durch das OADM-Modul in jedem der Standorte Folgendes umfasst: Erfassen mehrerer optischer Abwärtsstreckensignale verschiedener Wellenlängen, die gleich lokalen Wellenlängen sind, durch das OADM-Modul von den zwei Glasfaserverbindungen in verschiedenen Richtungen und
das Multiplexen der zwei Teile der optischen Aufwärtsstreckensignale, die die lokale Wellenlänge aufweisen, mit anderen optischen Aufwärtsstreckensignalen verschiedener Wellenlängen durch das OADM-Modul Folgendes umfasst: Multiplexen der mehreren optischen Aufwärtsstreckensignale verschiedener Wellenlänge, die gleich lokalen Wellenlängen sind, mit anderen optischen Aufwärtsstreckensignalen verschiedener Wellenlängen durch das OADM-Modul.

9. Verfahren nach Anspruch 8, wobei optische Signale, die zwischen den RRUs, die mit dem OADM-Modul verbunden sind, und dem OADM-Modul ausgetauscht werden, Farblichtsignale sind und jedes optische Signal, das zwischen den RRUs (342) ausgetauscht wird, ein Weißlichtsignal ist,
in jedem der Standorte mehrere RRUs dieselbe Wellenlänge oder voneinander verschiedene Wellenlängen nutzen und dieselbe RRU dieselbe Wellenlänge in den zwei Glasfaserverbindungen in verschiedenen Richtungen nutzt; und
in jedem der Standorte ein Verbindungsmodus zwischen dem OADM-Modul und den mehreren RRUs Folgendes umfasst: eine Ringstruktur, eine Kettenstruktur und eine Baumstruktur.

10. Verfahren nach Anspruch 7, 8 oder 9, ferner Folgendes umfassend:
in dem Fall, dass ein Ausfall an einer der zwei Glasfaserverbindungen in verschiedenen Richtungen auftritt, automatisches Nutzen einer anderen Glasfaserverbindung zur Datenübertragung.

## Revendications

1. Système d'interaction de données, comprenant : un ensemble d'unités de bande de base, BBU, (30), une unité de multiplexeur / démultiplexeur optique, OMD, (32), et de multiples sites (34) ;
dans lequel l'ensemble d'unités BBU (30) comprend une ou plusieurs unités BBU (300), l'unité de multiplexeur / démultiplexeur OMD (32) comprend deux modules de multiplexeur / démultiplexeur OMD (320), chacun des sites (34) comprend un module de multiplexeur d'insertion / extraction optique, OADM, (340), et une ou plusieurs unités distantes radio, RRU (342) ; l'ensemble d'unités BBU (30) est connecté à l'unité de multiplexeur / démultiplexeur OMD (32), le module de multiplexeur OADM (340) dans chacun des sites est connecté aux deux modules de multiplexeur / démultiplexeur OMD (320) de l'unité de multiplexeur / démultiplexeur OMD (32) par l'intermédiaire de deux liaisons par fibre optique dans différentes directions, chacun des modules de multiplexeur OADM (340) est connecté à une ou plusieurs unités RRU (342) par l'intermédiaire des deux liaisons par fibre optique dans différentes directions, et l'ensemble d'unités BBU (30) et les sites (34) sont concaténés dans un réseau de topologie en anneau ;
les sites (34) sont divisés en de multiples groupes de sites, et les sites dans chacun des multiples groupes de sites utilisent une même longueur d'onde et sont uniformément répartis dans le réseau de topologie en anneau ; dans lequel le nombre de sites entre deux sites adjacents d'un même groupe de sites est inférieur à un nombre maximum de sites concaténés utilisant différentes longueurs d'onde du réseau de topologie en anneau ;
chaque unité de ladite une ou desdites plusieurs unités BBU (300) est configurée de manière à : diviser un signal électrique de liaison descendante devant être envoyé à chaque unité RRU en deux parties, convertir les deux parties du signal électrique de liaison descendante en un signal optique de liaison descendante avec deux parties présentant une même longueur d'onde, et envoyer les deux parties du signal optique de liaison descendante à l'unité de multiplexeur / démultiplexeur OMD ; et recevoir un signal optique de liaison montante en provenance de l'unité de multiplexeur / démultiplexeur OMD et convertir le signal optique de liaison montante en un signal électrique de liaison montante et traiter le signal électrique de liaison montante ;
l'unité de multiplexeur / démultiplexeur OMD (32) est configurée de manière à :
multiplexer des signaux optiques de liaison descendante de différentes longueurs d'onde à partir de différentes unités BBU de ladite une ou desdites plusieurs unités BBU, et envoyer les deux parties du signal optique de liaison descendante au module de multiplexeur OADM dans chacun des sites, séparément, par l'intermédiaire des deux liaisons par fibre optique dans différentes directions par l'intermédiaire des deux modules de multiplexeur / démultiplexeur OMD, respectivement ; et démultiplexer le signal optique de liaison montante reçu en provenance du module de multiplexeur OADM en des signaux optiques de liaison montante de différentes longueurs d'onde, et envoyer les signaux optiques de liaison descendante démultiplexés de différentes longueurs d'onde aux unités BBU correspondantes ;
le module de multiplexeur OADM (340) dans chacun des sites est configuré de manière à : acquérir, à partir des deux liaisons par fibre optique dans différentes directions, des signaux optiques de liaison descendante qui présentent la même longueur d'onde qu'une longueur d'onde locale, et envoyer les signaux optiques de liaison descendante à des unités RRU connectées avec le module de multiplexeur OADM ; et recevoir un signal optique de liaison montante avec deux parties présentant la longueur d'onde locale en provenance des unités RRU connectées au module de multiplexeur OADM, multiplexer les deux parties du signal optique de liaison montante présentant la longueur d'onde locale avec d'autres signaux optiques de liaison montante de différentes longueurs d'onde, et envoyer les deux parties des signaux optiques de liaison montante multiplexés au module de multiplexeur OADM d'un site successif, respectivement, par l'intermédiaire des deux liaisons par fibre optique dans différentes directions, jusqu'à ce que les deux parties des signaux optiques de liaison montante multiplexés soient envoyées à l'unité de multiplexeur OMD par l'intermédiaire des deux modules de multiplexeur / démultiplexeur OMD, respectivement ; et
chaque unité de ladite une ou desdites plusieurs unités RRU (342) est configurée de manière à : convertir les signaux optiques de liaison descendante reçus en des signaux électriques de liaison descendante, extraire un signal correspondant des signaux électriques de liaison descendante, et traiter le signal correspondant, multiplexer le reste des signaux électriques de liaison descendante avec un signal électrique de liaison montante à envoyer à une unité BBU de ladite une ou desdites plusieurs unités BBU, diviser les signaux électriques multiplexés en deux parties, convertir les deux parties des signaux électriques en deux parties de signaux optiques de liaison montante présentant la longueur d'onde locale, et envoyer les deux parties des signaux optiques de liaison montante présentant la longueur d'onde locale, respectivement, par l'intermédiaire des deux liaisons par fibre optique dans les directions différentes, à une unité RRU successive de ladite une ou desdites plusieurs unités RRU, jusqu'à ce que les deux parties des signaux optiques de liaison montante soient envoyées au module de multiplexeur OADM.

2. Système selon la revendication 1, dans lequel le module de multiplexeur OADM (340) dans chacun des sites est configuré de manière à :
acquérir, à partir des deux liaisons par fibre optique dans différentes directions, de multiples signaux optiques de liaison descendante présentant des longueurs d'onde différentes qui sont identiques à des longueurs d'onde locales, et multiplexer les multiples signaux optiques de liaison descendante de différentes longueurs d'onde avec d'autres signaux optiques de liaison montante de différentes longueurs d'onde.

3. Système selon la revendication 1, dans lequel des signaux optiques échangés entre les unités RRU (342) connectées au module de multiplexeur OADM et le module de multiplexeur OADM (340) correspondent à des signaux de lumière colorée, et chaque signal optique échangé entre les unités RRU (342) correspond à un signal de lumière blanche.

4. Système selon la revendication 2, dans lequel, dans chacun des sites (34), de multiples unités RRU utilisent une même longueur d'onde ou des longueurs d'onde mutuellement différentes, et une même unité RRU utilise une même longueur d'onde dans les deux liaisons par fibre optique dans différentes directions.

5. Système selon la revendication 1, dans lequel, dans chacun des sites (34), un mode de connexion entre le module de multiplexeur OADM (340) et les multiples unités RRU (342) comprend : une structure en anneau, une structure en chaîne et une structure en arbre.

6. Système selon l'une quelconque des revendications 1 à 5, comprenant en outre :
un module de commutation automatique configuré de manière à, en cas de défaillance sur l'une des deux liaisons par fibre optique dans différentes directions, utiliser automatiquement une autre liaison par fibre optique pour une transmission de données.

7. Procédé d'interaction de données utilisé dans un système incluant un ensemble d'unités de bande de base, BBU, une unité de multiplexeur / démultiplexeur optique, OMD, et de multiples sites, l'ensemble d'unités BBU comprenant une ou plusieurs unités BBU, l'unité de multiplexeur / démultiplexeur OMD comprenant deux modules de multiplexeur / démultiplexeur OMD, chacun des sites comprenant un module de multiplexeur d'insertion/extraction optique, OADM, et une ou plusieurs unités distantes radio, RRU, l'ensemble d'unités BBU étant connecté à l'unité de multiplexeur / démultiplexeur OMD, le module de multiplexeur OADM dans chacun des sites étant connecté aux deux modules de multiplexeur / démultiplexeur OMD de l'unité de multiplexeur / démultiplexeur OMD par l'intermédiaire de deux liaisons par fibre optique dans différentes directions, chacun des modules de multiplexeur OADM étant connecté à ladite une ou auxdites plusieurs unités RRU par l'intermédiaire des deux liaisons par fibre optique dans différentes directions, et l'ensemble d'unités BBU et les sites étant concaténés dans un réseau de topologie en anneau, le procédé comprenant les étapes ci-dessous consistant à :
par le biais de chaque unité de ladite une ou desdites plusieurs unités de bande de base, BBU, diviser un signal électrique de liaison descendante devant être envoyé à chaque unité de ladite une ou desdites plusieurs unités RRU en deux parties de signal électrique de liaison descendante, convertir les deux parties du signal électrique de liaison descendante en un signal optique de liaison descendante avec deux parties présentant une même longueur d'onde, et envoyer les deux parties du signal optique de liaison descendante à l'unité de multiplexeur / démultiplexeur OMD (S901) ;
par le biais de l'unité de multiplexeur / démultiplexeur OMD, multiplexer des signaux optiques de liaison descendante de longueurs d'onde différentes à partir de différentes unités BBU de ladite une ou desdites plusieurs unités BBU, et envoyer les deux parties des signaux optiques de liaison descendante au module de multiplexeur OADM dans chaque site, séparément, par l'intermédiaire de deux liaisons par fibre optique dans différentes directions, par l'intermédiaire des deux modules de multiplexeur / démultiplexeur OMD, respectivement, (S902) ;
par le biais du module de multiplexeur OADM dans chacun des sites, acquérir, à partir des deux liaisons par fibre optique dans différentes directions, des signaux optiques de liaison descendante qui présentent la même longueur d'onde qu'une longueur d'onde locale, et envoyer les signaux optiques de liaison descendante à ladite une ou auxdites plusieurs unités RRU connectées au module de multiplexeur OADM (S903) ;
par le biais de chaque unité de ladite une ou desdites plusieurs unités RRU, convertir les signaux optiques de liaison descendante reçus en des signaux électriques de liaison descendante, extraire un signal correspondant des signaux électriques de liaison descendante, et traiter le signal correspondant, multiplexer le reste des signaux électriques de liaison descendante avec un signal électrique de liaison montante à envoyer à une unité BBU de ladite une ou desdites plusieurs unités BBU, diviser les signaux électriques multiplexés en deux parties, convertir les deux parties des signaux électriques en deux parties de signaux optiques de liaison montante présentant la longueur d'onde locale, et envoyer les deux parties des signaux optiques de liaison montante présentant la longueur d'onde locale, respectivement, par l'intermédiaire des deux liaisons par fibre optique dans les directions différentes, à une unité RRU successive de ladite une ou desdites plusieurs unités RRU, jusqu'à ce que les deux parties des signaux optiques de liaison montante soient envoyées au module de multiplexeur OADM (S904) ; et
par le biais du module de multiplexeur OADM dans chacun des sites, recevoir un signal optique de liaison montante avec deux parties présentant la longueur d'onde locale en provenance de ladite une ou desdites plusieurs unités RRU connectées au module de multiplexeur OADM, multiplexer les deux parties du signal optique de liaison montante présentant la longueur d'onde locale avec d'autres signaux optiques de liaison montante de différentes longueurs d'onde, et envoyer les deux parties des signaux optiques de liaison montante multiplexés au module de multiplexeur OADM dans un site successif, respectivement, par l'intermédiaire des deux liaisons par fibre optique dans différentes directions, jusqu'à ce que les deux parties des signaux optiques de liaison montante multiplexés soient envoyées à l'unité de multiplexeur OMD par l'intermédiaire des deux modules de multiplexeur / démultiplexeur OMD, respectivement (S1001) ;
par le biais de l'unité de multiplexeur / démultiplexeur OMD, démultiplexer le signal optique de liaison montante reçu en provenance du module de multiplexeur OADM en des signaux optiques de liaison montante de différentes longueurs d'onde, et envoyer les signaux optiques de liaison montante démultiplexés de différentes longueurs d'onde à des unités BBU correspondantes ; et
par le biais de chaque unité de ladite une ou desdites plusieurs unités BBU, recevoir un signal optique de liaison montante en provenance de l'unité de multiplexeur / démultiplexeur OMD, convertir le signal optique de liaison montante en un signal électrique de liaison montante et traiter le signal électrique de liaison montante (S1002).

8. Procédé selon la revendication 7, dans lequel l'étape d'acquisition, par le module de multiplexeur OADM dans chacun des sites, de signaux optiques de liaison descendante qui présentent la même longueur d'onde qu'une longueur d'onde locale à partir des deux liaisons par fibre optique dans différentes directions consiste à : acquérir, par le biais du module de multiplexeur OADM, à partir des deux liaisons par fibre optique dans différentes directions, de multiples signaux optiques de liaison descendante de longueurs d'onde différentes qui sont identiques à des longueurs d'onde locales ; et
l'étape de multiplexage, par le module de multiplexeur OADM, des deux parties des signaux optiques de liaison montante présentant la longueur d'onde locale avec d'autres signaux optiques de liaison montante de longueurs d'onde différentes consiste à :
multiplexer, par le biais du module de multiplexeur OADM, les multiples signaux optiques de liaison montante de longueurs d'onde différentes qui sont identiques à des longueurs d'onde locales, avec d'autres signaux optiques de liaison montante de différentes longueurs d'onde.

9. Procédé selon la revendication 8, dans lequel :
les signaux optiques échangés entre les unités RRU connectées au module de multiplexeur OADM et le module de multiplexeur OADM correspondent à des signaux de lumière colorée, et chaque signal optique échangé entre les unités RRU correspond à un signal de lumière blanche ;
dans chacun des sites, de multiples unités RRU utilisent une même longueur d'onde ou des longueurs d'onde mutuellement différentes, et une même unité RRU utilise une même longueur d'onde dans les deux liaisons par fibre optique dans différentes directions ; et
dans chacun des sites, un mode de connexion entre le module de multiplexeur OADM et les multiples unités RRU comprend : une structure en anneau, une structure en chaîne et une structure en arbre.

10. Procédé selon la revendication 7, 8 ou 9, comprenant en outre l'étape consistant à :
en cas de défaillance sur l'une des deux liaisons par fibre optique dans différentes directions, utiliser automatiquement une autre liaison par fibre optique pour une transmission de données.
